# EUROPÄISCHE PATENTANMELDUNG

(11) **EP 4 417 845 A2**
(43) Veröffentlichungstag der Anmeldung: **21.08.2024**
(21) Anmeldenummer: 24158726.0
(22) Anmeldetag: 20.02.2024
(51) Int. Cl.: F16L 5/12, F16L 5/14, F16L 59/12, F16L 39/00, F16L 5/02, F24F 1/32, H02G 3/22

(54) **WÄRMEÜBERTRAGER-WANDDURCHFÜHRUNG ZUR INSTALLATION EINES WÄRMEÜBERTRAGER-SYSTEMS MIT MEHREREN MEDIENFÜHRENDEN LEITUNGEN**

(30) Priorität: 20.02.2023 EP 23157638
(71) Anmelder: DOYMA GmbH & Co, 28876 Oyten (DE)
(72) Erfinder: Kesmann, Alexander, 27313 Dörverden (DE)
(74) Vertreter: Eisenführ Speiser

(57) **Zusammenfassung**

Die Erfindung betrifft einen Wärmeübertrager-Wanddurchführung (1, 1') zur Installation eines Wärmeübertrager-Systems (100) mit mehreren medienführenden Leitungen (114, 116), wobei die Wanddurchführung (1) zum Durchführen der Leitungen (114, 116) durch eine oberirdische Öffnung (104) eines Wandabschnitts (102) eingerichtet ist, mit wenigstens einer Verschlusseinheit (2, 4), wobei die Verschlusseinheit (2, 4) mindestens einen Durchgang (6, 6`) für die Leitungen (114, 116) aufweist und dazu eingerichtet ist, mit einer Wandfläche (106, 110) des Wandabschnitts (102) in Anlage gebracht zu werden. Die Wärmeübertrager-Wanddurchführung (1) umfasst eine mit der Verschlusseinheit (2, 4) koppelbaren Verbinderstruktur (12), wobei die Verbinderstruktur (12) mehrere strukturell in Reihe miteinander verbindbare Verbindersegmente (14) aufweist, welche jeweils endseitig Kopplungsmittel (16, 16') aufweisen, die für die strukturelle Verbindung der Verbindersegmente (14) miteinander eingerichtet sind, und wobei die Verbinderstruktur (12) zur geführten Aufnahme der Leitungen (114, 116) eingerichtet ist.

## Beschreibung

Die Erfindung betrifft eine Wärmeübertrager-Wanddurchführung zur Installation eines Wärmeübertrager-Systems mit mehreren medienführenden Leitungen, wobei die Wanddurchführung zum Durchführen der Leitung durch eine oberirdische Öffnung eines Wandabschnitts eingerichtet ist, mit wenigstens einer Verschlusseinheit, wobei die Verschlusseinheit mindestens einen Durchgang für die Leitungen aufweist und dazu eingerichtet ist, mit einer Wandfläche des Wandabschnitts in Anlage gebracht zu werden. Des Weiteren betrifft die Erfindung auch ein Wärmeübertrager-System sowie ein Verfahren zum Installieren einer Wärmeübertrager-Wanddurchführung zum Durchführen von zumindest zwei medienführenden Leitungen durch eine oberirdische Öffnung in einem Wandabschnitt.

Unter dem Begriff des Wärmeübertrager-Systems sind erfindungsgemäß Klimaanlagen, die im Inneren des Gebäudes eine Kühlwirkung erzeugen, und Heizanlagen, insbesondere Wärmepumpenanlagen, die im Inneren des Gebäudes eine Heizwirkung erzeugen, zu verstehen. Der Begriff Wärmeübertrager-System umfasst aber auch Nahwärme-, Fernwärme-, Erdwärme- und Solarthermie-Systeme.

Die erfindungsgemäße Wärmeübertrager-Wanddurchführung eignet sich für eine Wanddurchführung zur oberirdischen Installation eines Wärmeübertrager-Systems mit mehreren Leitungen. Die Wärmeübertrager-Wanddurchführung kann aber auch grundsätzlich für abweichende Einsatzzwecke zur Durchführung von Leitungen verwendet werden, wie beispielsweise für eine Wallbox für Elektro-Pkw, Wasserleitungen und Stromleitungen oder als Hausausführung für die Versorgung weiterer Bauten wie Swimmingpool, Gartenhäuschen, Poolbar oder Werkzeug- sowie Geräteschuppen oder dergleichen.

Im Stand der Technik ist das Verlegen von Fluidleitungen für das Wärmeübertrager-System, beispielsweise zwischen Innengerät und Außengerät, durch das Erdreich bekannt. Daneben ist aber, gerade beim Nachrüsten solcher Wärmeübertrager-Systeme an Bestandsbauten, auch das nicht bodenberührte, oberirdische Verbinden des Außengeräts mit dem Innengerät bekannt, bei dem die Fluidleitungen durch eine Außenwand eines Gebäudes hindurch verlegt werden.

In vielen Baustellensituationen werden die oberirdisch verlegten Fluidleitungen durch die Gebäude-Außenwand hindurchgeführt, wobei zwischen der Leitung und einer die Leitung umgebenden Wandfläche ein Spaltraum entsteht, und der verbliebene Spaltraum wird einfach mit geeignetem Bauschaum ausgefüllt. Solche Lösungen haben den Nachteil einer völlig unzureichenden Abdichtung gegen Umgebungseinflüsse wie Feuchtigkeit, Kälte, Lärm, UV-Strahlung etc. Zudem wird als Nachteil gesehen, dass derartige Lösungen nicht vogelpicksicher sind.

Die Installation eines Wärmeübertrager-Systems erfordert das Zusammenspiel mehrerer Gewerke am Installationsort. So wird beispielsweise die Kernbohrung durch die Gebäudewand hindurch in der Regel nicht vom selben Fachhandwerker eingebracht wie das Wärmeübertrager-System selbst.

Das Einhalten der relevanten Anforderungen und Randbedingungen, die sich aus der Gebäude- und Anlagentechnik ergeben und die üblicherweise in Lastenheften niedergeschlagen sind, können hierdurch nur erschwert erfüllt werden.

Es existieren zwar Dichtsysteme zum Einführen von medienführenden Leitungen in Gebäude hinein durch Wände hindurch. Diese sind aber bisweilen komplex aufgebaut und nur mit einem bestimmten Kostenrahmen erhältlich. Die Installation mit den bekannten Systemen ist kostenintensiv und für ungeschultes Personal bisweilen zeitintensiv sowie fehleranfällig. Für die Verwendung im Zusammenhang mit den Fluidleitungen eines Wärmeübertrager-Systems sind diese Systeme daher wenig geeignet.

Der Erfindung lag somit die Aufgabe zugrunde, eine Wärmeübertrager-Wanddurchführung zur Installation eines Wärmeübertrager-Systems, ein Wärmeübertrager-System sowie ein Verfahren zum Installieren einer Wärmeübertrager-Wanddurchführung anzugeben, die auf vereinfachte Weise mit geringem Montageaufwand in einer Öffnung eines Wandabschnitts installiert werden kann. Zumindest soll zu bisher bekannten Lösungen eine alternative Möglichkeit des Vorsehens einer Wärmeübertrager-Wanddurchführung vorgeschlagen werden.

Gemäß einem ersten Aspekt löst die Erfindung die ihr zugrundeliegende Aufgabe bei einer Wärmeübertrager-Wanddurchführung der eingangs bezeichneten Art mit den Merkmalen nach Anspruch 1. Insbesondere ist eine mit der Verschlusseinheit koppelbare Verbinderstruktur vorgesehen, wobei die Verbinderstruktur mehrere strukturell in Reihe miteinander verbindbare Verbindersegmente aufweist, welche jeweils endseitig Kopplungsmittel aufweisen, die für die strukturelle Verbindung der Verbindersegmente miteinander eingerichtet sind, und wobei die Verbinderstruktur zur geführten Aufnahme der Leitungen eingerichtet ist.

Vorliegend verfolgt die Erfindung durch die erfindungsgemäße Verbinderstruktur, die sich aus mehreren strukturell in Reihe miteinander verbindbaren Verbindersegmenten zusammensetzt, den Ansatz, dass die Länge der Verbinderstruktur ohne großen Montageaufwand, also ohne ein mechanisches Bearbeiten der Verbinderstruktur selbst, durch zum Beispiel ein Sägen auf Länge, vereinfacht und individuell auf die jeweilige Wandstärke eines Wandabschnitts, durch welche die medienführenden Leitungen hindurchzuführen sind, abgestimmt werden kann. Die Verbindersegmente können kaskadierend hintereinander zu einer beliebig langen Verbinderstruktur miteinander verbunden werden, wodurch die Überbrückung selbst unterschiedlicher Wandstärken sehr einfach möglich ist. Durch eine derartige Vereinfachung der Montage der Wärmeübertrager-Wanddurchführung kann deren Installation in einer Öffnung eines Wandabschnitts auch durch ein fachfremdes Gewerk, wie beispielsweise durch einen Fachhandwerker des Rohbaus, vorgenommen werden und muss nicht zwingend durch einen Heizungs- bzw. Wärmepumpen-Installateur erfolgen. Die Kopplungsmittel sind zumindest zum Positionieren der Verbindersegmente zueinander oder vorzugsweise zum Fixieren der Verbindersegmente untereinander eingerichtet. Vorzugsweise wird mindestens eine der voneinander abgewandten Wandflächen des Wandabschnitts zumindest in Anlage mit der Verschlusseinheit der erfindungsgemäßen Wanddurchführung gebracht. Die Verschlusseinheit wird mit einem Ende der Verbinderstruktur gekoppelt, die eine ausreichend hohe strukturelle Integrität aufweist, um die durch die Öffnung im Wandabschnitt hindurchzuführenden medienführenden Leitungen in Position halten zu können. Die Verbinderstruktur ist dabei zur geführten Aufnahme der durch die Öffnung im Wandabschnitt hindurchzuführenden Leitungen eingerichtet, wobei an der Durchführung vorzugsweise nur ein einziger zentraler Durchgang ausgebildet ist, so dass beim Durchschieben der Leitungen durch die an der Verbinderstruktur mindestens einen ausgebildeten Aufnahme zumindest ein seitliches Ausweichen oder Verhaken vermieden wird.

Unter einer medienführenden Leitung ist vorliegend eine Leitung zu verstehen, durch die ein Wärmeträgermedium, wie beispielsweise ein Kältemittel oder ein Wärmeträgermedium, vorliegend im Kreislauf zwischen einem Außengerät und einem Innengerät eines Wärmeübertrager-Systems transportiert werden.

Unter einem Außen- und Innengerät wird vorliegend jedes beliebige Gerät eines Wärmeübertrager-Systems verstanden, wobei eines der beiden Geräte unabhängig von seiner jeweiligen Anordnung, also ob innen oder außen, auch als Komponente ohne einen eigenen Regelkreis des jeweils anderen Geräts, das auf dem entgegengesetzten wandseitigen Bereich angeordnet ist, ausgebildet sein kann.

Gemäß einer bevorzugten Weiterbildung der Erfindung weisen die Verbindersegmente jeweils ein erstes Ende und ein zum ersten Ende entgegengesetzt angeordnetes, zweites Ende auf, wobei die Kopplungsmittel am ersten Ende jeweils funktions- oder formidentisch und die Kopplungsmittel am zweiten Ende jeweils funktions- oder formidentisch sind.

Unter Funktionsidentität wird hierbei verstanden, dass die so bezeichneten Teile jeweils untereinander austauschbar sind.

Beispielhaft ist jedes Kopplungsmittel eines ersten Endes dazu eingerichtet mit einem Kopplungsmittel der zweiten Enden wirkverbunden zu werden, auch wenn Formabweichungen auftreten können.

Unter Formidentität ist hierbei zu verstehen, dass die so bezeichneten Teile dem gleichen Fertigungsverfahren bzw. dergleichen Fertigungseinrichtung entstammen und im Rahmen der fertigungstechnisch zu erwartenden Toleranzen die gleichen Dimensionen und mechanischen Eigenschaften aufweisen.

Im Fall der Kopplungsmittel wird damit so erreicht, dass die Verbinderstruktur ausbildenden Verbindersegmente nur in einer Vorzugsrichtung zueinander ausgerichtet bzw. bevorzugt untereinander verbunden werden können (nämlich immer das erste mit dem zweiten Ende), wodurch das Risiko einer Fehlmontage der Verbinderbauteile untereinander reduziert wird. Das Fügen der Verbindersegmente zu einer beliebig langen erfindungsgemäßen Verbinderstruktur ist damit weiter vereinfacht, sodass auch ungeschultes Personal dies vornehmen kann. Bevorzugt sind die Kopplungsmittel am ersten und am zweiten Ende der Verbindersegmente jeweils verschiedenartig zueinander ausgebildet.

Eine bevorzugte Ausführungsform der Erfindung sieht vor, dass am ersten und am zweiten Ende eines Verbindersegments ein oder mehrere Kopplungsmittel vorgesehen sind, wobei die Kopplungsmittel am ersten Ende eines Verbindersegments mit den jeweils zu verbindenden Kopplungsmitteln am zweiten Ende eines weiteren Verbindersegments form- und/oder kraftschlüssig zusammenwirken. Mithilfe eines Form- und/oder Kraftschlusses zwischen den Kopplungsmitteln zweier miteinander zu verbindender Verbindersegmente ist eine bevorzugt dauerhaft feste Verbindung zwischen den Kopplungsmitteln bewirkt. Einem ungewollten Lösen der Verbindung zweier über die Kopplungsmittel miteinander verbundener Verbindersegmente ist bevorzugt entgegengewirkt. Insbesondere wirken zur Ausbildung eines Formschlusses zwischen zwei miteinander koppelbaren oder gekoppelten Verbindersegmenten jeweils ineinander einhakende Rastelemente. In einer möglichen Ausgestaltung der Erfindung sind die Kopplungsmittel dazu eingerichtet, dass eine zwischen den Kopplungsmitteln zweier Verbindersegmente hergestellte strukturelle Verbindung ohne entsprechende Werkzeueg nicht wieder gelöst werden kann. In einer Ausführungsform der Wärmeübertrager-Wanddurchführung wirken die Verbindersegmente über eine auf Kraftschluss basierende Steckverbindung miteinander zusammen. Die die Verschlusseinheiten miteinander koppelnde Verbinderstruktur wird in ihrer einfachsten Form durch Aneinanderstecken der die Verbinderstruktur ausbildenden Verbindersegmente erzeugt.

Gemäß einer bevorzugten Ausführungsform sind die Verbindersegmente über die Kopplungselemente jeweils direkt miteinander verbindbar oder mindestens zwei Verbindersegmente sind mittels eines die Kopplungsmittel der Verbindersegmente miteinander verbindenden, insbesondere als Zwischenstück zwischen den Verbindersegmenten fungierenden Verbinderstücks koppelbar. In einer Ausführung können bevorzugt mehrere unterschiedliche Verbinderstücke vorgesehen sein, welche entsprechend ihrem zu erfüllenden Anwendungszweck zum Beispiel elastische oder thermisch isolierende Eigenschaften haben. Dadurch ist eine gewisse Flexibiltät der Durchführung beim Einsetzen in die Öffnung des Wandabschnitts erzielt und/oder dem Entstehen von Kältebrücken entgegengewirkt.

Vorzugsweise sind sämtliche Verbindersegmente insgesamt funktions- oder formidentisch bzw. baugleich ausgeführt. Das hat den Vorteil, dass zur Ausgestaltung eines Verbindersegments, welches bevorzugt aus einem Material besteht, das mittels eines Spritzgussverfahrens herstellbar ist, nur ein Spritzgusswerkzeug für die Ausgestaltung der Verbindersegmente benötigt wird. Damit ist die Herstellung der Verbindersegmente als baugleiche Teile vereinfacht. Sämtliche die Verbinderstruktur ausbildenden Verbindersegmente weisen ein sich vom ersten zum zweiten Ende erstreckendes Längenmaß auf. Die Verbindersegmente weisen bevorzugt ein Längenmaß im Bereich von etwa 30 bis 120 mm auf, vorzugsweise im Bereich von etwa 40 bis etwa 60 mm.

Gemäß einer bevorzugten Ausgestaltung der Wärmeübertrager-Wanddurchführung sind die Kopplungsmittel an den Verbindersegmenten, insbesondere an deren ersten und zweiten Enden, als hohlzylindrische Steckverbinder ausgebildet. Vorzugsweise sind an jedem Ende eines Verbindersegments mindestens zwei, vorzugsweise vier Steckverbinder als Kopplungsmittel vorgesehen. Die Steckverbinder am ersten Ende des Verbindersegments weisen im Vergleich zu den Steckverbindern am zweiten Ende des Verbindersegments abweichende, jedoch mit den jeweiligen Steckverbindern am entgegengesetzten Ende korrespondierende Abmessungen auf. In einer Ausführung sind die Steckverbinder am ersten Ende als Steckaufnahme und die Steckverbinder am zweiten Ende des Verbindersegments als eine Art Steckhülse ausgebildet, deren Außendurchmesser auf den Innendurchmesser der Steckaufnahme am ersten Ende eines Verbindersegments angepasst ist. Mit Einschieben einer Steckhülse am zweiten Ende in eine Steckaufnahme am ersten Ende ist vorzugsweise ein Reibschluss zwischen deren miteinander in Kontakt bringbaren Außen- und Innenwandflächen erzeugt, der die strukturell feste Verbindung zwischen den Verbindersegmenten bewirkt.

Vorzugsweise sind wenigstens zwei Verschlusseinheiten vorgesehen, welche auf voneinander abgewandten Wandflächen des Wandabschnitts angeordnet und dazu eingerichtet sind, in Anlage mit dem Wandabschnitt gebracht und mittels der Verbinderstruktur miteinander gekoppelt zu werden. Damit ist eine vereinfachte Montage der Wärmeübertrager-Wanddurchführung in der Öffnung des Wandabschnittes erreicht, da die Verbinderstruktur durch das Verbinden der beiden Verschlusseinheiten nun von beiden Seiten in der Öffnung gehalten, insbesondere zentriert, wird.

Eine Weiterbildung sieht vor, dass wenigstens eine der beiden Verschlusseinheiten zum Abdichten gegenüber der Öffnung im Wandabschnitt sowie zum Abdichten gegenüber den Leitungen eingerichtet ist, welche den einen Durchgang oder die Durchgänge passieren. Vorzugsweise wird die Abdichtfunktion mit zumindest der außenseitig angeordneten Verschlusseinheit gegenüber der Öffnung im Wandabschnitt, sowie zum Abdichten gegenüber den die Durchgänge der Verschlusseinheit passierenden Leitungen hergestellt. Damit ist dem Eindringen von Feuchtigkeit über die Verschlusseinheit in die Öffnung im Wandabschnitt und in das Innere des Wandabschnitts entgegengewirkt. Vorzugsweise ist an der Wärmeübertrager-Wanddurchführung an mindestens einer Stelle Fluiddichtheit nach DIN EN 60529 hergestellt, die den Durchtritt von Fluid, wie Wasser, behindert. Die erfindungsgemäße Wärmeübertrager-Wanddurchführung weist vorzugsweise eine Schutzart von mindestens IP44 auf, wobei mittels der außenseitig am Wandabschnitt angeordneten Verschlusseinheit zumindest ein Schutz gegen Spritzwasser erzielt ist.

In einer bevorzugten Ausführungsform der Wärmeübertrager-Wanddurchführung haben die Verschlusseinheiten zumindest einen sich außerhalb der Öffnung erstreckenden Flanschkörper. Mit dem Vorsehen eines etwa kreisförmigen Flanschkörpers ist eine einfache Ausgestaltung der ersten und zweiten Verschlusseinheit, die zumindest in Anlage mit den Wandflächen des Wandabschnitts des Gebäudes bringbar sind, geschaffen. Vorzugsweise weist der insbesondere kreisförmige Flanschkörper einen Durchmesser auf, mit dem die Öffnung im Wandabschnitt bevorzugt vollständig abgedeckt ist.

Vorzugsweise umfasst mindestens eine der Verschlusseinheiten ein mit der Wandfläche des Wandabschnitts abdichtend in Anlage bringbares Dichtelement, das vorzugsweise ringförmig entlang der Peripherie der Verschlusseinheit verläuft. Insbesondere ist das Dichtelement so an der Verschlusseinheit angeordnet bzw. angeformt, dass das Dichtelement mit der die Öffnung in radialer Richtung umgebenden Wandfläche in Kontakt bringbar ist. In einer möglichen Ausführung ist an der Verschlusseinheit ein Dichtelement vorgesehen, das zumindest auch teilweise in die Öffnung des Wandabschnitts vorsteht, wodurch die Abdichtwirkung der Verschlusseinheit gegenüber dem Wandabschnitt weiter verbessert ist.

Das Dichtelement an der oder den Verschlusseinheiten ist vorzugsweise in einer Ausführung aus einem verformbaren Material, wie Gummi oder Kunststoff ausgebildet, welches als vorgefertigtes Formteil in einer Ausnehmung an der Innenseite der Dichtscheibe angeordnet ist. Das Dichtelement kann in einer Ausführung auch als Quellband sein. Das Quellband ist vorzugsweise als Polyurethan-Komprimierband, Polyethylen-Rundschnur, Polyurethan-Rundschnur oder Ethylen-Propylen-Dien-Kautschuk (EPDK)-Schaumstoffband ausgebildet. Gemäß einer alternativen Ausführungsform kann als Dichtelement auch Dickschichtkleber und/oder Schaumklebeband verwendet werden, welche vor dem Montieren der Verschlusseinheit auf dessen Innenseite aufgebracht werden.

In einer möglichen Ausführungsform der Erfindung weisen die Verschlusseinheiten jeweils mit den Kopplungsmitteln der Verbindersegmente zusammenwirkende Steckteile auf. Die Steckteile sind insbesondere an den Wandflächen des Wandabschnitts angeordnet, die den Innenseiten der Verschlusseinheiten zugeordnet sind. Die Steckteile stehen vorzugsweise senkrecht an den Innenseiten der Verschlusseinheiten vor und wirken mit den Kopplungsmitteln am ersten und zweiten Ende des die Verbinderstruktur in der Länge begrenzenden ersten und letzten Verbindersegments zusammen. Die innenseitig an den Verschlusseinheiten angeordneten Steckteile weisen insbesondere eine Länge auf, die vorzugsweise in etwa der Länge der Verbindersegmente zwischen ihrem jeweils ersten und zweiten Ende entspricht. Damit ist erreicht, dass bei der Installation der erfindungsgemäßen Wärmeübertrager-Wanddurchführung in der Öffnung die zweite von der entgegengesetzten Wandfläche des Wandabschnitts aus mit der Verbinderstruktur zu koppelnde Verschlusseinheit tatsächlich mit dem freien Ende der im Abstand zur Wandfläche des Wandabschnitts endenden Verbinderstruktur gekoppelt werden kann. In einer bevorzugten Ausführungsform bilden die an den Verschlusseinheiten innenseitig vorstehenden Steckteile eine Steckverbindung mit den Kopplungsmitteln an den Verbindersegmenten aus. Vorzugsweise sind beide Verschlusseinheiten zu den Enden der Verbinderstruktur in axialer Richtung verschiebbar aufgenommen.

Gemäß einer bevorzugten Weiterbildung sind die Steckteile als innenseitig an den Verschlusseinheiten vorstehende Hülsenkörper ausgebildet, die insbesondere bezogen auf die Abmessungen der Kopplungsmittel an den Verbindersegmenten abgestimmte Außenabmessungen haben. Mit den innenseitig vorstehenden Hülsenkörpern ist eine einfache herstellbare Steckverbindung zwischen den Verschlusseinheiten und den jeweiligen Enden der Verbinderstruktur bewirkt. Zudem bietet diese Art der Verbindung die Teleskopierbarkeit der Verschlusseinheiten relativ zu den entgegengesetzten Enden der Verbinderstruktur. Die Steckteile an den Verschlusseinheiten sind in einer Ausführungsform innerhalb der hohlzylindrisch ausgebildeten Kopplungsmittel vorzugsweise in axialer Richtung geführt. Die Außenabmessungen (Außendurchmesser) der Steckteile sind für eine reibungsfreie Verschiebbarkeit geringfügig kleiner gewählt als die Innenabmessungen (Innendurchmesser) der Kopplungsmittel an den Verbindersegmenten.

Vorzugsweise sind mehrere Durchgänge für jeweils eine medienführende Leitung an der mindestens einen mit einer Wandfläche des Wandabschnitts in Anlage bringbaren Verschlusseinheit vorgesehen. Damit ist ein individuelles Führen der Leitung durch die Verschlusseinheit und ein verbessertes Positionieren der Leitungen in der Öffnung des Wandabschnitts und insbesondere innerhalb derwenigstens einen zentralen Aufnahme für die Leitungen an der Verbinderstruktur bewirkt.

Zur weiteren Vereinfachung der Kopplung der zweiten Verschlusseinheit mit einer bereits in die Öffnung des Wandabschnitts eingesetzten Verbinderstruktur ist gemäß einer bevorzugten Weiterbildung der erfindungsgemäßen Wärmeübertrager-Wanddurchführung vorgesehen, dass die Verbindersegmente an mindestens einem ihrer Enden eine Aufnahme für einen darin einsetzbaren Fügestift aufweisen. Der Fügestift ist dazu eingerichtet, als Fügehilfe verwendet zu werden. Mit den sich bevorzugt bis außerhalb der Öffnung im Wandabschnitt erstreckenden Fügestifte ist eine Ausrichtung der "zweiten" Verschlusseinheit in radialer Richtung bezogen auf das freie Ende der Verbinderstruktur in der Öffnung bewirkt. Damit vereinfacht sich das Koppeln der Verschlusseinheit mit der in der Öffnung des Wandabschnitts endenden Verbinderstruktur. Die insbesondere zylindrischen Fügestifte weisen beispielsweise entlang ihrer Erstreckung einen Gewindeabschnitt auf, der in einen korrespondierenden, als Innengewinde ausgebildeten Abschnitt der Aufnahme an den Enden der Verbindersegmente einschraubbar ist.

Eine bevorzugte Weiterbildung der erfindungsgemäßen Wärmeübertrager-Wanddurchführung sieht vor, dass ebenfalls die Verschlusseinheiten funktions- oder formidentisch ausgebildet sind. Damit ist neben der vereinfachten Herstellung der Verbindersegmente eine ebenfalls vereinfachte Herstellung der Verschlusseinheiten bewirkt. Diese sind unabhängig von ihrer Anordnung, ob Außen- oder Innenseite des Wandabschnitts, baugleich ausgeführt. Auch zum Herstellen der Verschlusseinheiten der erfindungsgemäßen Wärmeübertrager-Wanddurchführung wird demnach nur ein Spritzgusswerkzeug benötigt. Zudem weisen die Verschlusseinheiten, unabhängig davon, mit welchem Ende der Verbinderstruktur die Verschlusseinheiten gekoppelt werden, Steckteile mit identischen Abmessungen auf. Auch die Durchgänge für die medienführenden Leitungen an den Verschlusseinheiten weisen bevorzugt identisch ausgebildete freie Querschnitte auf. Vorzugsweise sind die medienführenden Leitungen von einer Isolierung umgeben, wobei die Durchgänge, welche eine insbesondere zylindrische Form haben, an die Außenabmessungen der Isolierung angepasste Durchmesser aufweisen.

Vorzugsweise weisen die Verschlusseinheiten zusätzlich ein oder mehrere Durchgänge für eine Strom- oder Signalleitung auf. Die erfindungsgemäße Wärmeübertrager-Wanddurchführung kann demnach auch zum elektrischen und/oder datenübertragenden Verbinden eines Außengeräts mit einem Innengerät verwendet werden. Vorzugsweise erfolgt sowohl die Stromversorgung des Außengeräts als auch die Ansteuerung des Außengeräts, insbesondere ausgehend vom Innengerät des Wärmeübertrager-Systems.

Gemäß einer bevorzugten Ausführungsform weisen die Durchgänge für die Strom- oder Signalleitungen Kabeldurchführungen auf, die bevorzugt abdichtend geschlossen sind und besonders bevorzugt einen auf den Durchmesser der durchzuführenden elektrischen Leitung entsprechend anpassbaren Innendurchmesser haben. Damit ist ein Abdichten des Durchgangs gegen die hindurchgeführte elektrische Leitung erreicht. Als Kabeldurchführung werden vorzugsweise Kabelverschraubungen, Schrumpfschläuche oder wasserdichte Kabelsteckverbinder verwendet.

Eine bevorzugte Ausgestaltung der Wärmeübertrager-Wanddurchführung sieht vor, dass der oder die Durchgänge für die Strom- oder Signalleitung koaxial zu dem Steckteil an der Verschlusseinheit und zu den die Verbindersegmente miteinander verbindenden Hülsenkörpern fluchten, wobei die Steckteile zusammen mit den Hülsenkörpern vorzugsweise Leerrohre für die Strom- oder Signalleitung ausbilden. Die Strom- oder Signalleitungen sind damit in der Öffnung gekapselt geführt. Dies erleichtert insbesondere ein nachträgliches Durchführen der Strom- oder Signalleitungen durch eine unter Umständen schon vollständig innerhalb der Öffnung des Wandabschnitts montierte und gegebenenfalls bereits mit Wärmedämmmaterial gefüllte Wärmeübertrager-Wanddurchführung.

Vorzugsweise ist das bzw. sind die Leerrohre dazu eingerichtet, die darin aufgenommenen elektrischen Leitungen elektromagnetisch abzuschirmen. Damit kann eine elektromagnetische Störung bzw. Beeinflussung durch elektromagnetische Wechselwirkung zwischen mehreren durch die Wärmeübertrager-Wanddurchführung hindurchgeführten Leitungen vermindert und bestenfalls vermieden werden. Mittels der Leerrohre ist zudem eine gewerkefachliche Trennung, betreffend die Montage- und Installationsarbeiten, weiter vereinfacht, da die Arbeiten durch einen Elektroinstallateur zeitlich unabhängig von der eigentlichen Montage der Wärmeübertrager-Wanddurchführung und ebenso unabhängig vom Hindurchführen der medienführenden Leitungen durch die Wärmeübertrager-Wanddurchführung vorgenommen werden können.

Gemäß einer bevorzugten Weiterbildung weist mindestens eine der Verschlusseinheiten eine Einfüllöffnung und/oder Entlüftung für ein in die Öffnung einzubringendes Wärmedämmmaterial auf. Mit dem Vorsehen von zumindest einer Einfüllöffnung an einer der Verschlusseinheiten ist das Einbringen von Wärmedämmmaterial in den Aufnahmeraum nach dem Montieren der Wärmeübertrager-Wanddurchführung innerhalb der Öffnung auf vereinfachte Weise möglich. Vorzugsweise kann mit der Einfüllöffnung eine Einfüllhilfe, z.B. in Form eines Einfüllschlauches, fluidleitend verbunden sein, welche das Einbringen des Wärmedämmmaterials in einen von den Verschlusseinheiten zumindest seitlich begrenzten Aufnahmeraum erleichtert. Über die Einfüllöffnung wird zum Beispiel ein Zwei-Komponenten-Schaum eingegeben. Vorzugsweise weist das über die Einfüllöffnung der Verschlusseinheit eingebrachte Wärmedämmmaterial schallentkoppelnde und/oder schalldämpfende Eigenschaften und/oder schwingungsdämpfende Eigenschaften auf.

Mithilfe des über die Einfüllöffnung eingegebenen Wärmedämmmaterials soll eine thermische Isolierwirkung umgesetzt werden. Neben einer wärmeisolierenden Wirkung kann das in den Aufnahmeraum zwischen die Verschlusseinheiten eingebrachte Wärmedämmmaterial auch eine schallisolierende Funktion haben. Etwaige im Betrieb des Wärmeübertrager-Systems an dem Außen- und/oder Innengerät entstehende Schwingungen werden zumindest deutlich vermindert über die mindestens eine Leitung in den Gebäude-Außenwandabschnitt eingeleitet.

Aufgrund der bevorzugt baugleichen Ausgestaltung der Verschlusseinheiten wird insbesondere die als Materialdurchbruch ausgebildete Einfüllöffnung in der einen Verschlusseinheit zum Einbringen des Wärmedämmmaterials verwendet, während der Materialdurchbruch in der anderen Verschlusseinheit als Entlüftung für die durch das eingebrachte Wärmedämmmaterial verdrängte Luft dienen kann.

In einer optionalen oder alternativen Ausgestaltung wird zusätzlich zu einem oder anstelle eines nachträglich in die Öffnung einzubringenden Wärmedämmmaterials ein sich entlang eines Abschnitts der Verbinderstruktur erstreckendes, aus einem oder mehreren Formteilen ausgebildetes Wärmedämmelement verwendet. Das Wärmedämmelement, das ein- oder mehrstückig ausgebildet sein kann, wird vollständig oder nur um Bereiche der in die Öffnung einsetzbaren Verbinderstruktur herumgelegt. Ein solches als Wärmedämmelement vorgefertigtes Wärmedämmmaterial wird vorzugsweise zusammen mit der entsprechend vorkonfektionierten Verbinderstruktur in die Öffnung des Wandabschnitts eingesetzt. Das formteilbasierte Wärmedämmmaterial ist vorzugsweise partiell oder vollständig aus Mineralwolle, Styropor (in Kugelform oder als Schalungs-/Formteil), ausgeformtes Polyurethan (PU-Schaum), Glaswolle oder Glaswolle-Schalung oder Schaumglasformteile ausgebildet. Damit sind eine gute Formanpassbarkeit und gleichzeitig eine niedrige Wärmeleitung miteinander kombiniert. Vorzugsweise weist das formteilbasierte Wärmedämmmaterial schallentkoppelnde und/oder schalldämpfende Eigenschaften bzw. schwingungsdämpfende Eigenschaften auf.

Eine bevorzugte Weiterbildung der Wärmeübertrager-Wanddurchführung sieht eine Spanneinrichtung vor, welche dazu eingerichtet ist, die Verschlusseinheiten von beiden Seiten des Wandabschnitts aus in axialer Richtung gegen die jeweiligen Wandflächen zu verspannen. Mit Verspannen der Verschlusseinheiten gegeneinander werden diese in axialer Richtung derart gegen die jeweils zugeordneten Wandflächen gedrückt, dass ein zwischen der außenwandseitig angeordneten Verschlusseinheit und der Wandfläche angeordnetes Dichtelement abdichtend in Anlage mit der äußeren Wandfläche des Außenwandabschnitts gelangt. Das Dichtelement, das aus einem elastisch verformbaren Material, wie beispielsweise Silikon, EPDM, Gummi wie zum Beispiel NBR, Zellkautschuk oder andere geeignete Elastomerdichtungsmaterialien, ausgebildet sein kann, legt sich an die Oberflächenstruktur der Wandfläche an, wodurch die notwendige Abdichtung gegenüber der Wand und damit der Öffnung im Wandabschnitt erreicht ist.

In einer bevorzugten Ausführung weist die Spanneinrichtung mindestens ein sich zumindest durch eine der Verschlusseinheiten erstreckendes Spannmittel auf, welches von der Außen- oder Innenseite des Wandabschnitts aus betätigbar ist. In einer möglichen Ausgestaltung erfolgt das Verspannen der Verschlusseinheiten mittels des Spannmittels in axialer Richtung bezogen auf die Mittenachse der Verschlusseinheiten. Alternative Ausgestaltungen sehen eine Spanneinrichtung mit mehr als zwei Spannmitteln vor, die parallel und im Abstand zur Mittenachse sich von einer Verschlusseinheit zur zweiten Verschlusseinheit erstrecken. Vorzugsweise wird das oder werden die Spannmittel durch sich in Längsrichtung der Verbinderstruktur erstreckende Ausnehmungen in den Verbindersegmenten geführt. Das Spannmittel kann beispielsweise eine Spannschraube oder Gewindestange aufweisen, die mit einem an der gegenüberliegenden Verschlusseinheit angeordneten Befestigungsabschnitt zusammenwirkt.

Vorzugsweise ist an den Verschlusseinheiten eine Zentrierhilfe für zumindest das radiale Ausrichten der Verschlusseinheiten in der Öffnung vorgesehen, wobei die Zentrierhilfe vorzugsweise mehrere kreisförmig um den Mittenbereich der Verschlusseinheit herum angeordnete, innenseitig vorstehende Zentrierstege aufweist. Mithilfe der Zentrierhilfe ist eine bevorzugt mittige Anordnung der Wärmeübertrager-Wanddurchführung innerhalb der Öffnung im Wandabschnitt bewirkt. Die sich durch die Öffnung im Wandabschnitt hindurch erstreckenden medienführenden Leitungen weisen dadurch jeweils einen bevorzugt einzuhaltenden Mindestabstand zu der die Öffnung definierenden angrenzenden Laibungsfläche auf. Ein in die Öffnung einzubringendes Wärmedämmmaterial kann durch das mittige Anordnen der Wärmeübertrager-Wanddurchführung innerhalb der Öffnung eine gleichmäßige Isolierwirkung um die Wärmeübertrager-Wanddurchführung herum erzeugen.

In einer möglichen Ausgestaltung ist die Zentrierhilfe vorzugsweise aus mehreren kreisförmig um den Mittenbereich der Verschlusseinheit herum angeordneten innenseitig vorstehenden Zentrierstegen ausgebildet. Neben einer radialen Ausrichtung der Verschlusseinheiten zur Öffnung kann mittels der Zentrierstege bevorzugt eine Arretierung der Verschlusseinheiten in axialer Richtung innerhalb der Öffnung umgesetzt werden. Vorzugsweise weisen die Zentrierstege an ihrer außenseitigen Umfangsfläche radial nach außen vorstehende Rastelemente auf, die mit Einsetzen einer Verschlusseinheit in die Öffnung vorzugsweise eine Art Formschlussverbindung mit der die Öffnung definierenden Laibungsfläche des Wandabschnitts eingehen.

Zudem erfolgt mithilfe der bevorzugt mindestens vier oder mehr kreisförmig um den Mittenbereich herum angeordneten Zentrierstege eine Ausrichtung des zumindest mit einer der Verschlusseinheiten auf der Innenseite anzuordnenden Dichtelements. Das bevorzugt eine kreisringförmige Ausgestaltung aufweisende Dichtelement wird mit seiner inneren Umfangsfläche auf die innenseitig vorstehenden Zentrierstege aufgeschoben.

Vorzugsweise weisen die Verbindersegmente mindestens eine Aufnahme für eine der durch die Öffnung hindurchführbaren Leitungen auf, wobei jedes Verbindersegment vorzugsweise ferner eine parallel und/oder senkrecht zur Aufnahme für die Leitungen verlaufende Verrippung hat. Mit den bevorzugt zwei Aufnahmen an jedem Verbindersegment für die durch die Öffnung hindurchführbaren Leitungen ist eine Führung der insbesondere mit einer Isolierung versehenen medienführenden Leitung bewirkt, was das Einsetzen der Leitungen in die in der Öffnung montierten Wärmeübertrager-Wanddurchführung vereinfacht. Jedes Verbindersegment weist vorzugsweise parallel und/oder senkrecht zu der/den Aufnahme(n) für die medienführenden Leitungen eine Verrippung auf, welche die strukturelle Integrität der Verbindersegmente im Einzelnen wie auch der zu einer Einheit miteinander verbundenen Verbinderstruktur insgesamt erhöht. Gleichzeitig ist mit der Ausgestaltung einer parallel und/oder senkrecht an den Verbindersegmenten verlaufenden Verrippung im Vergleich zu einem aus Vollmaterial bestehenden Verbindersegment eine erhebliche Materialeinsparung bei annähernd gleicher Festigkeit erzielt.

Eine bevorzugte Weiterbildung der Wärmeübertrager-Wanddurchführung sieht eine den außenseitigen Durchführungsbereich an der Verschlusseinheit überdeckende Abdeckung vor, welche vorzugsweise mehrteilig ist. Mithilfe einer solchen Abdeckung kann nach erfolgter Montage der Wärmeübertrager-Wanddurchführung die Sicht auf den Durchführungsbereich an einer jeweiligen Verschlusseinheit mit seinen die Verschlusseinheit gegenüber den medienführenden Leitungen abdichtenden Dichtelementen verdeckt werden. Die Abdeckung weist vorzugsweise eine der folgenden Außenkonturen auf: kreisrund, rechteckig, quadratisch, oval, polygonal etc.

Die Abdeckung ist vorzugsweise einteilig ausgebildet. In einer alternativen Ausgestaltung ist die Abdeckung mehrteilig ausgebildet, was das nachträgliche Ansetzen der Abdeckung außenseitig auf die Verschlusseinheiten nach zumindest dem Installieren der medienführenden Leitungen weiter vereinfacht. Die Abdeckung kann beispielsweise aus Metall, insbesondere Edelstahl, Kunststoff oder einer Kombination mehrerer Materialien einschließlich der vorgenannten ausgebildet sein.

Die Abdeckung ist vorzugsweise beschichtet, beispielsweise mit einer oder mehreren Lackschichten und/oder zumindest teilflächig mit einer oder mehreren Schichten aus Folie ausgerüstet. In einer möglichen Ausgestaltung weist die Abdeckung Kennzeichnungsfelder für Beschriftungen und/oder Grafiken, Logos, Piktogramme auf und/oder dient als Werbeträger.

Vorzugsweise ist mit der Wärmeübertrager-Wanddurchführung in einem Außenwandabschnitt Luftdichtheit nach DIN 4108-7 hergestellt. Das Wärmedämmmaterial ist in Richtung der die Öffnung begrenzenden Wandfläche derart schallisolierend, dass die im Betrieb des Wärmeübertragers am Außen- und/oder Innengerät entstehenden und von dem Anschlussmodul der Verbindungs-Anordnung in Form von Körperschall auf den Außenwandabschnitt übertragenen Schwingungen auf ein Minimum reduziert sind, die mit Messgeräten noch erfassbar sind, aber nicht mehr als störend wahrgenommen werden. Somit wird ein gewünschter Schallschutz nach DIN 4109 erfüllt.

Die Erfindung betrifft in einem zweiten Aspekt eine Wärmeübertrager-Wanddurchführung zur Installation eines Wärmeübertrager-Systems mit mehreren medienführenden Leitungen, wobei die Wanddurchführung zum Durchführen der Leitungen durch eine oberirdische Öffnung eines Wandabschnitts eingerichtet ist, mit einer ersten Verschlusseinheit, und einer zweiten Verschlusseinheit, wobei die Verschlusseinheiten Durchgänge für die Leitungen aufweisen, und die Verschlusseinheiten dazu eingerichtet sind, auf voneinander abgewandten Wandflächen des Wandabschnitts in Anlage mit dem Wandabschnitt gebracht zu werden.

Gemäß einem ersten Aspekt löst die Erfindung die ihr zugrundeliegende Aufgabe bei einer Wärmeübertrager-Wanddurchführung der eingangs bezeichneten Art mit den Merkmalen nach Anspruch 13. Insbesondere ist eine die Verschlusseinheiten miteinander koppelnden Verbinderstruktur vorgesehen, wobei die Verbinderstruktur mehrere strukturell in Reihe miteinander verbindbare Verbindersegmente aufweist, welche jeweils endseitig Kopplungsmittel aufweisen, die für die strukturelle Verbindung der Verbindersegmente miteinander eingerichtet sind, und wobei die Verbinderstruktur zur Ausbildung der durch die Öffnung geführten, medienführenden Leitungen eingerichtet ist.

Dieser Aspekt der Erfindung macht sich ebenfalls die Erkenntnis zu Nutze, dass die Länge der erfindungsgemäßen Verbinderstruktur, die sich aus mehreren strukturell in Reihe miteinander verbindbaren Verbindersegmenten zusammensetzt, ohne großen Montageaufwand, also ohne ein mechanisches Bearbeiten der Verbinderstruktur selbst, durch zum Beispiel ein Sägen auf Länge, vereinfacht und individuell auf die jeweilige Wandstärke eines Wandabschnitts, durch welche die medienführenden Leitungen hindurchzuführen sind, abgestimmt werden kann. Im Gegensatz zum vorherigen Aspekt werden die medienführenden durch die Verbinderstruktur und insbesondere die mit der Verbinderstruktur zusammenwirkenden Verschlusseinheiten ausgebildet.

Der zweite Aspekt macht sich dieselben Vorteile zunutze wie der erste erfindungsgemäße Aspekt, und bevorzugte Ausführungsformen des ersten Aspekts sind zugleich auch bevorzugte Ausführungsformen des zweiten Aspekts und umgekehrt, weswegen diesbezüglich zur Vermeidung von Wiederholungen auf die obigen Ausführungen verwiesen wird.

Insbesondere ist vorgesehen, dass die als hohlzylindrische Steckverbinder ausgebildeten Kopplungsmittel als medienführende Leitung verwendet werden, wobei an den Kopplungsmittel eine Dichtung zum Ausbilden einer fluiddichten Verbindung zwischen den einzelnen Verbindersegmenten vorgesehen sind.

Die Erfindung betrifft in einem weiteren Aspekt ein Wärmeübertrager-System, mit einem auf einer Innenseite eines Wandabschnitts eines Gebäudes anordenbaren Innengerät und einem auf der Außenseite des Wandabschnitts anordenbaren und durch eine oberirdische Öffnung im Wandabschnitt mittels mehrerer medienführender Leitungen mit dem Innengerät verbindbaren Außengerät.

Die Erfindung betreffend das Wärmeübertrager-System löst auch die der erfindungsgemäßen Wärmeübertrager-Wanddurchführung zugrunde gelegte Aufgabe, indem das Wärmeübertrager-System eine in der oberirdischen Öffnung des Wandabschnitts montierbare Wärmeübertrager-Wanddurchführung nach einer der vorstehend beschriebenen bevorzugten Ausführungsformen aufweist. Ein mit einer solchen Wärmeübertrager-Wanddurchführung ausgerüstetes erfindungsgemäßes Wärmeübertrager-System kann vereinfacht an Gebäuden mit Wandabschnitten mit variierender Wandstärke installiert werden, wobei das Montieren der Wärmeübertrager-Wanddurchführung in der Öffnung des Wandabschnitts nicht zwingend von einem Fachhandwerker eines Heizungs- bzw. Wärmepumpengewerks, sondern bereits durch einen Fachhandwerker des Rohbaus vorgenommen werden kann. Zudem ist es für die Installation des erfindungsgemäßen Wärmeübertrager-Systems nicht notwendig, dass sämtliche für die Aufstellung des Systems benötigten Fachgewerke gleichzeitig vor Ort sein müssen. Die Installation kann in zeitlich unabhängiger Abfolge vorgenommen werden. Damit ist die Montage bzw. Installation eines solchen Wärmeübertrager-Systems grundsätzlich vereinfacht.

Der dritte Aspekt macht sich dieselben Vorteile zunutze wie der erste erfindungsgemäße Aspekt, und bevorzugte Ausführungsformen des ersten Aspekts sind zugleich auch bevorzugte Ausführungsformen des zweiten Aspekts und umgekehrt, weswegen diesbezüglich zur Vermeidung von Wiederholungen auf die obigen Ausführungen verwiesen wird.

Die Erfindung betrifft gemäß einem vierten Aspekt ein Verfahren zum Installieren einer Wärmeübertrager-Wanddurchführung zum Durchführern von zumindest zwei medienführenden Leitungen durch eine oberirdische Öffnung in einem Wandabschnitt.

Das erfindungsgemäße Verfahren löst die eingangs beschriebene Aufgabe, wobei die Wärmeübertrager-Wanddurchführung insbesondere nach einer der vorstehend beschriebenen bevorzugten Ausführungsformen ausgebildet ist, mit den Schritten:
- Bereitstellen oder Herstellen einer oberirdischen Öffnung in einem Gebäude-Außenwandabschnitt;
- Vorkonfektionieren einer Wärmeübertrager-Wanddurchführung, durch Fügen von mindestens zwei oder mehr Verbindersegmenten zu einer Verbinderstruktur, welche eingerichtet ist, sich entlang eines Abschnitts der Öffnung zu erstrecken;
- Koppeln einer ersten Verschlusseinheit mit einem Ende der Verbinderstruktur;
- Einsetzen der mit einer Verschlusseinheit gekoppelten Verbinderstruktur in die Öffnung, wobei die mit der Verbinderstruktur verbundene Verschlusseinheit mit einer innen- oder außenseitigen Wandfläche des Wandabschnitts in Anlage gebracht wird, und
- Koppeln einer zweiten Verschlusseinheit mit dem zur ersten Verschlusseinheit entgegengesetzten Ende der Verbinderstruktur und in Anlage bringen der zweiten Verschlusseinheit mit der gegenüberliegenden Wandfläche des Wandabschnitts.

Mithilfe der erfindungsgemäßen Verfahrensschritte ist der Ansatz verfolgt, mit wenigen übersichtlichen und einfach durchzuführenden Handgriffen eine Wärmeübertrager-Wanddurchführung in einer oberirdischen Öffnung eines Wandabschnitts eines Gebäudes installieren zu können. Ein solch erfindungsgemäßes Verfahren kann nicht nur durch einen Heizungs- und/oder Wärmepumpeninstallateur, sondern auch durch einen Fachhandwerker des Rohbaus zuverlässig ausgeführt werden, da Fehler in der Montage vermieden sind und nach der Montage der Wärmeübertrager-Wanddurchführung ein zufriedenstellendes Endprodukt vorliegt.

In einem Wandabschnitt eines Gebäudes, in dem eine solche, erfindungsgemäße Wärmeübertrager-Wanddurchführung installiert werden soll, wird eine Öffnung im Wandabschnitt oberhalb des Bodenniveaus, also oberirdisch, erzeugt. Das kann in der Bauabfolge prinzipiell auf zwei unterschiedliche Vorgehensweisen erfolgen: Entweder wird der betreffende Wandabschnitt vollflächig hergestellt und anschließend, zu einem späteren Zeitpunkt, die Öffnung in Form eines Durchbruchs darin erzeugt, oder der Wandabschnitt des Gebäudes wird mit der vorgesehenen Öffnung für die Wärmeübertrager-Wanddurchführung in einem Arbeitsgang hergestellt.

In einem nächsten Schritt wird die Wärmeübertrager-Wanddurchführung vorkonfektioniert, was insbesondere durch Fügen von zwei oder mehr Verbindersegmenten zu einer Verbinderstruktur erfolgt. Insbesondere werden die zwei oder mehr Verbindersegmente über ihre miteinander korrespondierenden Kopplungsmittel miteinander verbunden, insbesondere die Verbindersegmente jeweils endseitig zumindest abschnittsweise ineinandergesteckt. Es werden in der Anzahl so viele Verbindersegmente hintereinander verbunden, dass eine Verbinderstruktur erzeugt ist, deren Länge zwar geringer als die Wandstärke ist, in der die Wärmeübertrager-Wanddurchführung montiert wird, aber die übrigbleibende Restwandstärke geringer ist als die Länge eines Verbindersegments.

Ein Ende der vorkonfektionierten Verbinderstruktur wird mit einer Verschlusseinheit gekoppelt, wobei insbesondere die Verschlusseinheit mit ihren innenseitig vorstehenden Steckteilen in die damit korrespondierenden Kopplungsmittel an einem Ende der Verbinderstruktur eingeschoben wird. Zwischen Steckteil und Kopplungsmittel kann eine Dichttülle zur Abdichtung eines vorhanden Ringspalts angeordnet sein. Dabei bleibt die Verschlusseinheit weiterhin in axialer Richtung beweglich zur Verbinderstruktur. Die einseitig mit der Verschlusseinheit versehene Verbinderstruktur wird dann in die Öffnung eingesetzt derart, dass die Verschlusseinheit mit einer der Wandflächen des Wandabschnitts in Anlage gebracht wird.

Von der anderen Wandfläche des Wandabschnitts aus wird nun eine weitere Verschlusseinheit mit dem zur ersten Verschlusseinheit entgegengesetzten Ende der in die Öffnung des Wandabschnitts eingesetzten Verbinderstruktur gekoppelt. Vorzugsweise wird die Verschlusseinheit auf der gegenüberliegenden Wandfläche ebenfalls in Anlage mit dem Wandabschnitt gebracht. Die auch an der anderen Verschlusseinheit innenseitig vorstehenden Steckteile dienen ebenfalls zum Koppeln der Verschlusseinheit mit den damit korrespondierenden Kopplungsmitteln am anderen Ende der Verbinderstruktur. Die Steckteile an der Verschlusseinheit werden insbesondere in die Kopplungsmittel am zweiten Ende der Verbinderstruktur eingeschoben. Anstelle einer weiterhin möglichen Verschiebbarkeit der Verschlusseinheiten relativ zu den Enden der Verbinderstruktur können an den Steckteilen der Verschlusseinheiten bevorzugt auch mit den Kopplungsmitteln korrespondierende Verrastmittel vorgesehen sein, die das Einschieben der Verschlusseinheit in die jeweiligen Enden der Verbinderstruktur zulassen, eine Gegenbewegung, also das Herausziehen der Verschlusseinheiten aus den Enden der Verbinderstruktur hingegen behindern, womit eine alternative Möglichkeit des Spannens der Verschlusseinheiten gegen die Wandflächen verwirklicht ist.

Das Verfahren zum Installieren einer Wärmeübertrager-Wanddurchführung wird durch einen, mehrere oder sämtliche der nachfolgend angeführten Verfahrensschritte weitergebildet. Mit dem Koppeln der zweiten Verschlusseinheit mit der Verbinderstruktur werden die erste und zweite Verschlusseinheit gegen die Wandflächen des Außenwandabschnitts verspannt. Damit ist eine gezielte Anpresskraft zwischen den Verschlusseinheiten, welche beispielsweise einen sich gegen die Wandflächen des Wandabschnitts anlegenden Flanschkörper haben können, und dem dazwischen angeordneten, die Öffnung umgebenden Wandabschnitt erreicht. Vorzugsweise wird zusammen mit dem Verspannen wenigstens eine der Verschlusseinheiten gegenüber der Öffnung im Außenwandabschnitt abgedichtet. Dazu weist insbesondere die auf der außenseitigen Wandfläche angeordnete Verschlusseinheit ein Dichtelement auf, das sich mit in Anlage bringen an der außenseitigen Wandfläche daran abdichtend anlegt. Nachdem die Verbinderstruktur und die endseitig angeordneten Verschlusseinheiten innerhalb der Öffnung des Wandabschnitts montiert sind, werden vorzugsweise zwei medienführende Leitungen durch an der Wanddurchführung ausgebildete Durchgänge hindurchgeführt. Zusätzlich zu den medienführenden Leitungen wird bevorzugt mindestens eine Strom- oder Signalleitung durch wenigstens einen zusätzlich an der Wanddurchführung ausgebildeten Durchgang hindurchgeführt. Vorzugsweise werden sowohl die medienführenden Leitungen als auch die Strom- oder Signalleitung gegenüber mindestens einer der Verschlusseinheiten, insbesondere gegen die außenseitige Verschlusseinheit, unter Verwendung geeigneter Dichtmittel abgedichtet. Die Abdichtung erfolgt vorzugsweise mithilfe eines zylindrischen Dichtungsteils, beispielsweise aus Zellkautschuk, dessen Außendurchmesser gegen einen jeweiligen Durchgang für die medienführende Leitung oder die Strom- oder Signalleitung abdichtet. Das Dichtungsteil weist ferner eine Ausnehmung auf, die an die Abmessung der hindurchzuführenden medienführenden Leitung oder des Strom- oder Signalleitung angepasst ist.

In einer möglichen Ausgestaltung des Verfahrens wird vor dem Einsetzen der mit einer Verschlusseinheit versehenen Verbinderstruktur in die Öffnung ein als Formteil ausgebildetes Wärmedämmmaterial entlang eines Abschnitts der vorkonfektionierten Verbinderstruktur angeordnet. Das Einsetzen der Verbinderstruktur erfolgt dann zusammen mit dem die Verbinderstruktur zumindest abschnittsweise außenseitig umgebenden Formteil in die Öffnung des Wandabschnitts. Alternativ kann auch nach dem Koppeln der zweiten Verschlusseinheit mit der Verbinderstruktur ein Wärmedämmmaterial in einen zwischen den Verschlusseinheiten definierten Aufnahmeraum eingebracht werden. Das Einbringen des Wärmedämmmaterials erfolgt insbesondere nach dem Montieren der Verbinderstruktur und der Verschlussteile in der Öffnung und dem zumindest nachfolgend vorgenommenen Hindurchführen der medienführenden Leitung durch die Wärmeübertrager-Wanddurchführung.

In einem weiteren Aspekt betrifft die Erfindung die Verwendung einer Wärmeübertrager-Wanddurchführung, insbesondere ausgebildet nach einer der vorstehend beschriebenen bevorzugten Ausführungsformen zum Durchführen von mindestens zwei medienführenden Leitungen für das fluidleitende Verbinden eines außenseitig an einem Gebäude anordenbaren Außengeräts mit einem im Gebäude anordenbaren Innengerät eines Wärmeübertrager-Systems durch eine oberirdische Öffnung in einem Gebäude-Außenwandabschnitt.

Die erfindungsgemäße Verwendung macht sich dieselben Vorteile zunutze wie die erfindungsgemäße Wärmeübertrager-Wanddurchführung des ersten Aspekts, das erfindungsgemäße Wärmeübertrager-System gemäß dem zweiten Aspekt sowie das erfindungsgemäße Verfahren gemäß dem dritten Aspekt. Die zu den drei ersten Aspekten beschriebenen bevorzugten Ausführungsformen bzw. Weiterbildungen sind zugleich auch bevorzugte Ausführungsformen der erfindungsgemäßen Verwendung und umgekehrt, sofern sich diese nicht widersprechen, weswegen diesbezüglich zur Vermeidung von Wiederholungen auf die obigen Ausführungen verwiesen wird.

Aus den vorstehend beschriebenen Aspekten ergibt sich, dass die Durchführung in erster Linie als Durchführung durch Seitenwände von Gebäuden entwickelt worden ist. Sie ist aber auch geeignet, und wird in einer bevorzugten Ausführungsform auch dazu verwendet, eine Durchführung durch eine Geschoss- oder Gebäudedecke hindurch bereitzustellen.

Die Erfindung wird im Folgenden anhand eines bevorzugten Ausführungsbeispiels unter Bezugnahme auf die beigefügten Figuren näher beschrieben. Hierbei zeigen:
- Fig. 1: eine Ansicht eines erfindungsgemäßen Wärmeübertrager-Systems;
- Fig. 2: eine Ansicht einer Ausführungsform einer erfindungsgemäßen Wärmeübertrager-Wanddurchführung innerhalb einer Öffnung eines Wandabschnitts;
- Fig. 3: eine perspektivische Ansicht von Teilen der erfindungsgemäßen Wärmeübertrager-Wanddurchführung;
- Fig. 4: eine weitere perspektivische Ansicht auf die Teile der Wärmeübertrager-Wanddurchführung aus Fig. 3;
- Fig. 5: eine Ansicht, welche zeigt, wie Teile der erfindungsgemäßen Wärmeübertrager-Wanddurchführung in eine Öffnung eingesetzt werden;
- Fig. 6: eine Ansicht, welche zeigt, wie die erfindungsgemäße Wärmeübertrager-Wanddurchführung komplettiert wird;
- Fig. 7: eine perspektivische Ansicht, welche das Hindurchführen von medienführenden Leitungen durch die erfindungsgemäße Wärmeübertrager-Wanddurchführung zeigt;
- Fig. 8: eine Ansicht, welche das Abdichten von zumindest den medienführenden Leitungen gegenüber Durchgängen an einer Verschlusseinheit der Wärmeübertrager-Wanddurchführung verdeutlicht;
- Fig. 9: eine Ansicht, welche das Inkontaktbringen einer Abdeckung mit einer der Verschlusseinheiten der erfindungsgemäßen Wärmeübertrager-Wanddurchführung zeigt;
- Fig. 10: eine perspektivische Ansicht, welche das Hindurchführen einer Strom- oder Datenleitung durch die erfindungsgemäße Wärmeübertrager-Wanddurchführung zeigt;
- Fig. 11: eine perspektivische Ansicht einer komplettierten Wärmeübertrager-Wanddurchführung;
- Fig.12-15: Ansichten einer weiteren Ausführungsform einer erfindungsgemäßen Wärmeübertrager-Wanddurchführung;
- Fig.16-19: Ansichten noch einer weiteren Ausführungsform einer erfindungsgemäßen Wärmeübertrager-Wanddurchführung, und
- Fig. 20: eine Ansicht des Wärmeübertrager-Systems nach Fig. 1 und der erfindungsgemäßen Wanddurchführung nach den Fig. 2 bis 11.

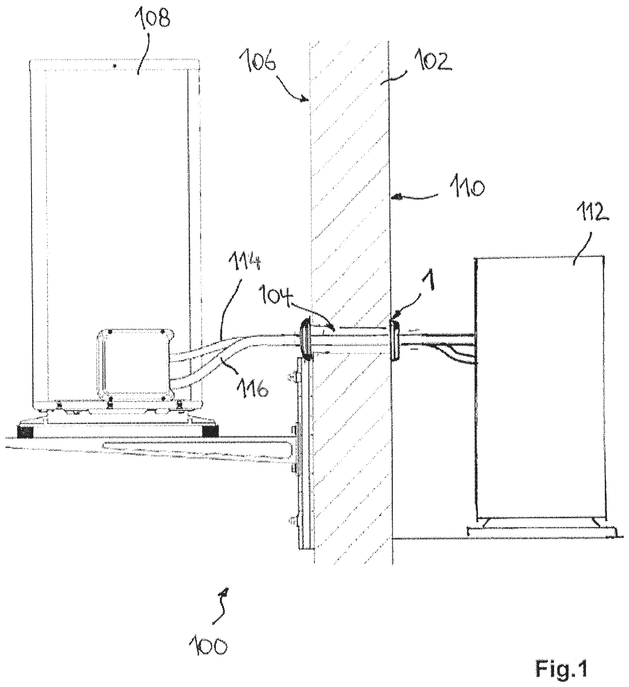

Fig. 1 zeigt ein Wärmeübertrager-System 100, wie beispielsweise einer Wärmepumpe oder einer Klimaanlage, zum Aufheizen oder Kühlen eines Gebäudes. Das Wärmeübertrager-System 100 ist an einen Gebäude-Außenwandabschnitt 102 installiert, durch den hindurch eine oberirdisch verlaufende Öffnung 104 ausgebildet ist. Auf der außenseitigen Wandfläche 106 des Außenwandabschnitts 102 ist ein Außengerät 108 des Wärmeübertrager-Systems 100 angeordnet. Auf der innenseitigen Wandfläche 110 des Außenwandabschnitts 102 ist ein Innengerät 112 des Wärmeübertrager-Systems 100 angeordnet. Außengerät 108 und Innengerät 112 sind über mindestens eine, vorliegend zwei medienführende Leitungen 114, 116 miteinander verbunden. Ferner sind das Außen- und Innengerät 108, 112 über nicht näher dargestellte Strom- bzw. Signalleitungen für die Stromversorgung und die Ansteuerung des Außengeräts 108 elektrisch verbunden.

Innerhalb der Öffnung 104 ist eine vorliegend schematisiert dargestellte Wärmeübertrager-Wanddurchführung 1 angeordnet, mittels derer die Verbindung von Außen- und Innengerät 108, 112 durch den Gebäude-Außenwandabschnitt 102 hindurch erfolgt. Mithilfe der erfindungsgemäßen Wärmeübertrager-Wanddurchführung 1 wird die Installation des gezeigten erfindungsgemäßen Wärmeübertrager-Systems 100 vereinfacht. Zudem ermöglicht die Wärmeübertrager-Wanddurchführung 1 eine dauerhaft sichere Abdichtung im Bereich der Öffnung 104 des Außenwandabschnitts 102.

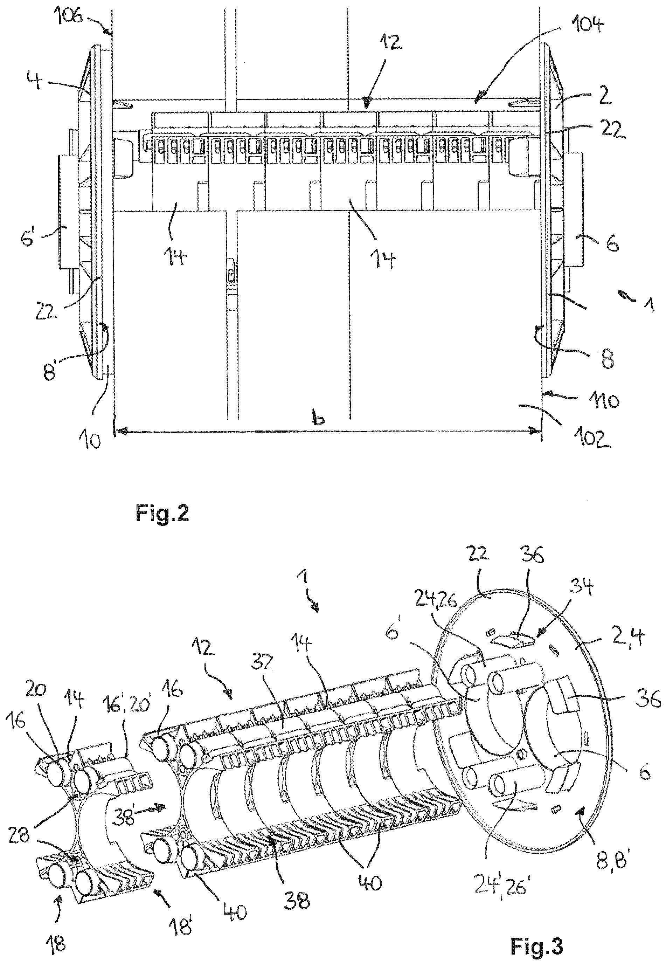

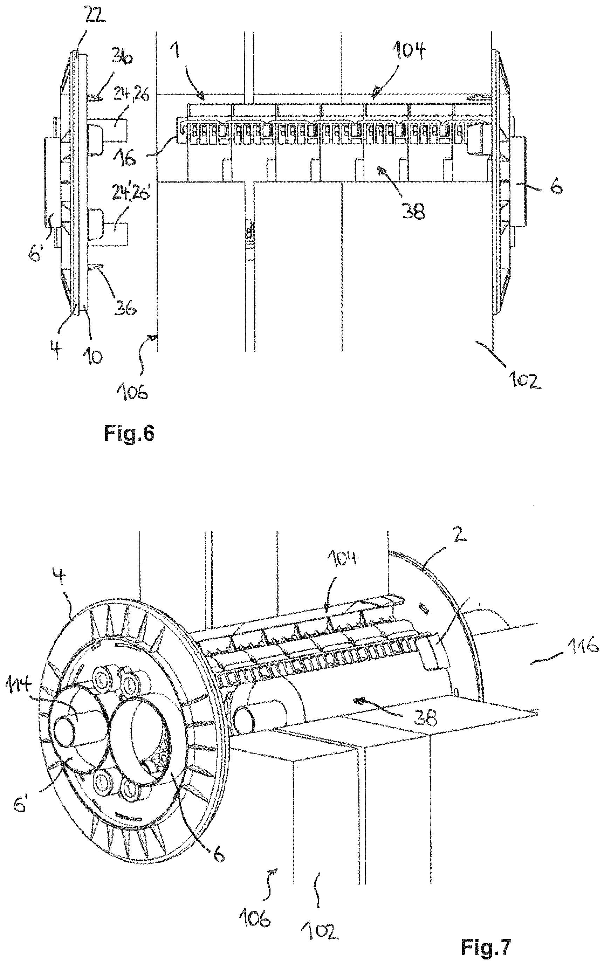

Fig. 2 zeigt eine vergrößerte Ansicht einer möglichen Ausführung einer Wärmeübertrager-Wanddurchführung 1 zur Installation eines Wärmeübertrager-Systems 100 mit mehreren medienführenden Leitungen 114, 116, wobei die Wanddurchführung 1 zum Durchführen der Leitungen 114, 116 durch eine oberirdische Öffnung 104 im Wandabschnitt 102 eingerichtet ist. Die Wärmeübertrager-Wanddurchführung 1, im Weiteren auch nur als Wanddurchführung 1 bezeichnet, weist eine erste Verschlusseinheit 2 und eine zweite Verschlusseinheit 4 auf, welche jeweils Durchgänge 6, 6' (Fig. 3, 7) für die durch die Öffnung 104 hindurchzuführenden Leitungen 114, 116 aufweist.

Ferner sind die Verschlusseinheiten 2, 4 dazu eingerichtet, auf voneinander abgewandten Wandflächen 106, 110 des Wandabschnitts 102 in Anlage mit dem Wandabschnitt 102 gebracht zu werden. Die Verschlusseinheiten 2, 4 werden insbesondere mit ihren den Wandflächen 106, 110 zugeordneten Innenseiten 8, 8' direkt oder zumindest indirekt in Kontakt gebracht. In der vorliegend gezeigten Ausführung ist zumindest die der außenseitigen Wandfläche 106 zugeordnete Verschlusseinheit gegenüber der Öffnung 104 im Wandabschnitt 102 abgedichtet. Insbesondere ist an der Verschlusseinheit 2 ein Dichtelement 10 vorgesehen, das die Abdichtung zwischen der Verschlusseinheit 2 und der Wandfläche 106 gewährleistet. Die Verschlusseinheiten 2, 4 sind durch eine Verbinderstruktur 12 miteinander gekoppelt, wobei die Verbinderstruktur 12 zur geführten Aufnahme der durch die Öffnung 104 hindurchzuführenden Leitungen 114, 116 eingerichtet ist. Erfindungsgemäß umfasst die Verbinderstruktur 12, um verschiedene Wandstärken b zwischen den zu beiden Seiten des Wandabschnitts anzuordnenden Verschlusseinheiten 2, 4 überbrücken zu können, mehrere strukturell in Reihe miteinander verbindbare Verbindersegmente 14, welche jeweils endseitig miteinander korrespondierende Kopplungsmittel 16, 16` für eine strukturelle Verbindung der Verbindersegmente 14 untereinander haben.

Die Verbindersegmente 14 weisen jeweils ein erstes Ende 18 und ein zum ersten Ende entgegengesetzt angeordnetes, zweites Ende 18' auf. Dabei sind die Kopplungsmittel 16 am ersten Ende 18 jeweils funktions- oder formidentisch und die Kopplungsmittel 16' am zweiten Ende 18` ebenfalls jeweils funktions- oder formidentisch ausgebildet. Mithilfe der erfindungsgemäß ausgebildeten Verbindersegmente 14 kann durch Kaskadierung der Verbindersegmente 14 hintereinander eine beliebig lange Verbinderstruktur 12 erzeugt werden.

An jedem Ende 18, 18' der Verbindersegmente 14 sind mehrere Kopplungsmittel 16, 16' vorgesehen, wobei die Kopplungsmittel 16 am ersten Ende 18 des Verbindersegments 14 mit den jeweils zu verbindenden Kopplungsmitteln 16' am zweiten Ende 18` eines weiteren Verbindersegments 14 form- und/oder kraftschlüssig zusammenwirken. Durch den Form- und/oder Kraftschluss ist eine feste Verbindung zwischen den die Verbinderstruktur 12 erzeugenden Verbindersegmenten 14 bewirkt.

Gemäß einer bevorzugten Ausführung sind sämtliche Verbindersegmente insgesamt funktions- oder formidentisch bzw. baugleich ausgeführt.

Die Kopplungsmittel 16, 16` an den Verbindersegmenten 14 sind in der gezeigten Ausführung als hohlzylindrische Steckverbinder 20, 20' ausgeführt, wobei die Steckverbinder 20 am ersten Ende 18 Außenabmaße, insbesondere einen Außendurchmesser haben, der auf die Innenabmaße, insbesondere den Innendurchmesser der Steckverbinder 20' am zweiten Ende 18` eines jeden Verbindersegments 14 abgestimmt ist.

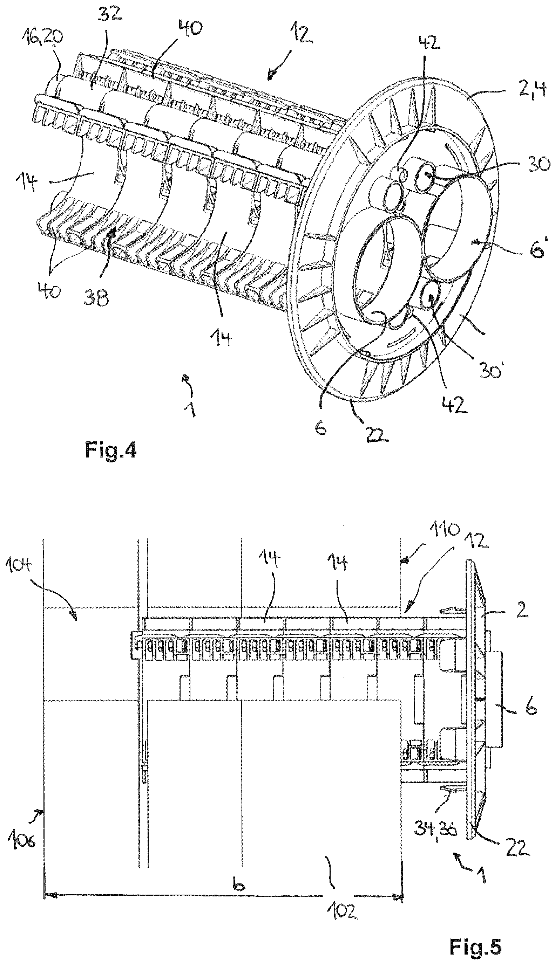

Wie ferner aus den Fig. 3 und 4 ersichtlich, weisen die Verschlusseinheiten 2, 4 zumindest einen sich außerhalb der Öffnung erstreckenden Flanschkörper 22 auf. Mit dem Flanschkörper 22 der Verschlusseinheit 2 wirkt das Dichtelement 10 zusammen, welches sich vorzugsweise ringförmig entlang der Peripherie der Verschlusseinheit 2, insbesondere des Flanschkörpers 22 erstreckt.

Wie aus Fig. 2 und 3 ersichtlich, sind an den Innenseiten 8, 8' der Verschlusseinheiten 2, 4 ferner mit den Kopplungsmitteln 16, 16` der Verbindersegmente 14 zusammenwirkende Steckteile 24, 24' ausgebildet. Die Steckteile 24, 24' sind als innenseitig an den Verschlusseinheiten 2, 4 vorstehende Hülsenkörper 26, 26' ausgebildet, die insbesondere bezogen auf die Abmessungen der als Steckverbinder 20, 20' ausgebildeten Kopplungsmittel 16, 16' an den Verbindersegmenten 14 abgestimmte Außenabmessungen haben. Vorliegend werden die Steckteile 24, 24' in den Kopplungsmitteln 16, 16` in axialer Richtung der Verbinderstruktur 12 verschieblich geführt aufgenommen. Damit ist die Kopplung der Verschlusseinheiten 2, 4 mit der Verbinderstruktur 12 gewährleistet.

Ferner sind, was nicht näher gezeigt ist, an den Verbindersegmenten 14 Aufnahmen 28 für nicht abgebildete, darin einsetzbare Fügestifte als Fügehilfe für die mit einem Ende der in die Öffnung 104 des Wandabschnitts 102 eingesetzten Verbinderstruktur 12 zu koppelnde Verschlusseinheit vorgesehen.

Ebenso wie die Verbindersegmente 14 sind auch die Verschlusseinheiten 2, 4 funktions- oder formidentisch bzw. baugleich ausgebildet, wodurch zum Herstellen der erfindungsgemäßen Wärmeübertrager-Wanddurchführung eine verringerte Anzahl an Einzelbauteilen benötigt wird und somit die Herstellung der Wanddurchführung 1 insgesamt vereinfacht ist. Sowohl für die Verbindersegmente als auch für die Verschlusseinheiten 2, 4 wird jeweils nur eine Spritzgussform benötigt.

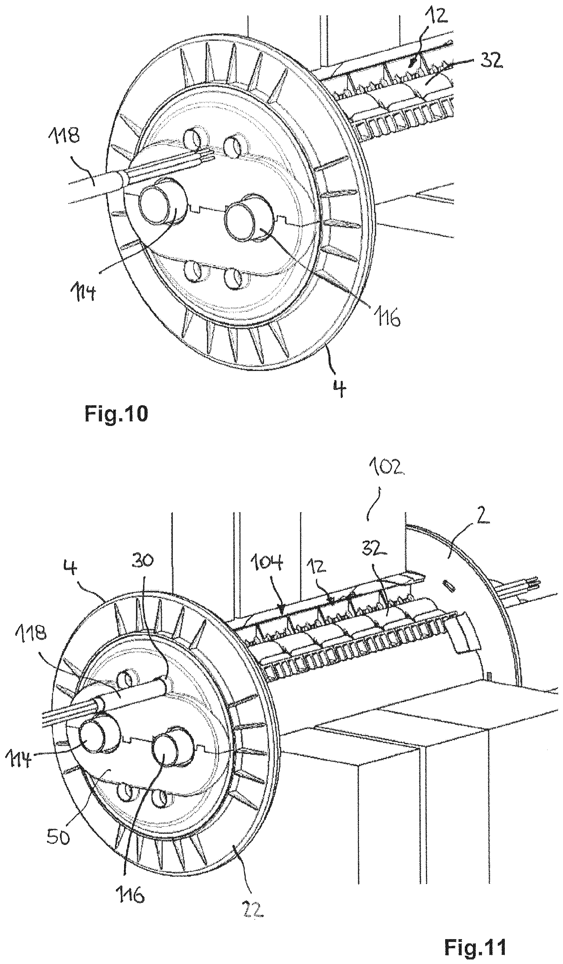

Neben den Durchgängen 6, 6' für die medienführenden Leitungen 114, 116 sind an den Verschlusseinheiten zusätzlich ein oder mehrere Durchgänge für eine Strom- oder Signalleitung 118 (Fig. 10, 11) ausgebildet. Die Durchgänge 30, 30' für die Strom- oder Signalleitung 118 fluchten insbesondere zu den Steckteilen 24, 24' an den jeweiligen Verschlusseinheiten 2, 4 und zu den die Verbindersegmente miteinander verbindenden Kopplungsmitteln 16, 16', insbesondere den Hülsenkörpern 26, 26`. Die Steckteile 24, 24' bilden dabei zusammen mit den Hülsenkörpern 26, 26' Leerrohre 32 für die Strom- oder Signalleitung aus. Zur Abdichtung zwischen den Steckteilen 24, 24' und den Kopplungsmitteln 16, 16' der Verbindersegmente 14 wird eine nicht näher gezeigte Dichttülle eingesetzt, welche das Eindringen von Wärmedämmmaterial in den als Leerohr 32 für die Strom- und Datenleitung ausgebildeten Durchgang 30, 30' verhindert.

Die in die Öffnung 104 eingesetzte Wanddurchführung 1 weist ferner eine nicht näher gezeigte Spanneinrichtung auf, welche dazu eingerichtet ist, die Verschlusseinheiten 2, 4 von beiden Seiten des Wandabschnitts 102 aus in axialer Richtung gegen die jeweiligen Wandflächen 106, 110 zu verspannen. Die nicht näher gezeigte Spanneinrichtung weist dazu mindestens ein sich zumindest durch eine der Verschlusseinheiten 2, 4 erstreckendes Spannmittel auf, welches jeweils von der Außenseite oder Innenseite des Wandabschnitts 102 betätigbar ist. Insbesondere erstreckt sich das nicht dargestellte Spannmittel durch die Verbindersegmente 14. Vorzugsweise erstreckt sich das Spannmittel durch beide der Verschlusseinheiten 2, 4 hindurch.

Wie ferner aus den Fig. 2 und 3 zu entnehmen, sind auf der Innenseite 8, 8' der Verschlusseinheiten 2, 4 jeweils eine Zentrierhilfe 34 für zumindest das radiale Ausrichten der Verschlusseinheiten 2, 4 in der Öffnung 102 angeordnet. Vorliegend weist die Zentrierhilfe 34 mehrere kreisförmig um den Mittenbereich der Verschlusseinheit herum angeordnete, an der Innenseite 8, 8' vorstehende Zentrierstege 36 auf.

Wie aus den Fig. 3 und 4 zu entnehmen, weisen die Verbindersegmente 14 jeweils Aufnahmen 38, 38' für die durch die Öffnung 104 hindurchführbaren medienführenden Leitungen 114, 116 auf. Zudem ist an jedem Verbindersegment eine parallel und/oder senkrecht zu den Aufnahmen 38, 38' für die Leitungen 114, 116 verlaufende Verrippung 40 vorgesehen, mit der die strukturelle Integrität bzw. Festigkeit der einzelnen Verbindersegmente verbessert ist. Jede Verschlusseinheit 2, 4weist eine Einfüllöffnung 42 für ein in die Öffnung einzubringendes Wärmematerial, wie beispielsweise einen Zwei-Komponenten-Schaum auf. Die Einfüllöffnung 42 dient zugleich als Entlüftung. Mit dem insbesondere nach dem Hindurchführen der medienführenden Leitungen 114, 116 durch die erfindungsgemäße Wanddurchführung 1 eingebrachten Wärmedämmmaterial erfolgt eine vorteilhafte thermische wie auch schallisolierende Wirkung der Leitungen 114, 116 gegenüber dem Wandabschnitt 102.

Alternativ kann anstelle eines zwischen die Verschlusseinheiten 2, 4 nach der Montage der Wanddurchführung 1 in die Öffnung 104 im Wandabschnitt einzubringenden Wärmedämmmaterials ein aus einem oder mehreren Formteilen ausgebildetes Wärmedämmmaterial verwendet werden, das mindestens entlang eines Abschnitts der Verbinderstruktur 12 angeordnet und zusammen mit der vorkonfektionierten Verbinderstruktur 12 in die Öffnung 104 eingesetzt wird.

In den Fig. 5 bis 11 ist ein beispielhaftes Verfahren zum Installieren einer Wärmeübertrager-Wanddurchführung 1 zum Durchführen von zumindest zwei medienführenden Leitungen 114, 116 durch eine oberirdische Öffnung 104 in einem Wandabschnitt 102 gezeigt. In einem ersten Schritt des erfindungsgemäßen Verfahrens wird, wie Fig. 5 verdeutlicht, eine oberirdische Öffnung 104 in dem Wandabschnitt 102 eines Gebäudes bereitgestellt bzw. hergestellt. In Abhängigkeit von der Wandstärke b wird eine entsprechende Anzahl von Verbindersegmenten 14 zu einer Verbinderstruktur 12 zusammengefügt (Fig. 3). Die zu einer Einheit verbundene Verbinderstruktur 12 wird an einem Ende mit einer Verschlusseinheit 4 gekoppelt, wobei die Verbinderstruktur 12 insbesondere mit ihren als hohlzylindrische Steckverbinder ausgebildeten Kopplungsmitteln 16' über die an der Innenseite 8' der Verschlusseinheit 4 vorstehenden Steckteile 24, 24' geschoben wird.

Die mit der Verschlusseinheit 4 gekoppelte Verbinderstruktur 12 wird dann, siehe Fig. 5, in die Öffnung 104 des Wandabschnitts 102 eingesetzt, bis, wie Fig. 6 verdeutlicht, die Verschlusseinheit 4 mit der innenseitigen Wandfläche 110 in Anlage gebracht ist. Über die an der Innenseite 8' axial vorstehenden Zentrierstege 36 erfolgt ein radiales Ausrichten der Verschlusseinheit 4 zur Öffnung 104 in dem Wandabschnitt 102.

Anschließend wird die zweite Verschlusseinheit 2 mit dem zur ersten Verschlusseinheit 4 entgegengesetzten Ende der Verbinderstruktur 12 gekoppelt, wobei bevorzugt auch die Verschlusseinheit 2 mit der gegenüberliegenden Wandfläche, insbesondere der außenseitigen Wandfläche 106 des Wandabschnitts 102 in Anlage gebracht wird. Dabei gelangt das an der Innenseite 8 der Verschlusseinheit 2 angeordnete Dichtelement 10 abdichtend in Anlage mit der Wandfläche 106, wie Fig. 2 näher zeigt.

Das Koppeln der Verschlusseinheit 2 mit dem freien Ende der Verbinderstruktur 12 erfolgt insbesondere über die Steckteile 24, 24`, welche in die Kopplungsmittel 16 am letzten Verbindersegment 14 der Verbinderstruktur 12 eingeschoben werden. Auch die Verschlusseinheit 2 wird mittels der Zentrierstege 36 in radialer Richtung zur Öffnung 104 im Wandabschnitt 102 ausgerichtet. In Abhängigkeit von der Ausgestaltung der Steckteile 24, 24' an den Innenseiten 8, 8' der Verschlusseinheiten 2, 4 und den damit zusammenwirkenden Kopplungsmitteln 16, 16` der damit in Eingriff gebrachten Verbindersegmente 14 kann eine Rastverbindung hergestellt sein, die ein selbsttätiges Herausziehen der Steckteile 24, 24' aus den Kopplungsmitteln 16, 16' behindert.

In einer nicht näher dargestellten Ausführungsform können die Verschlusseinheiten zusätzlich gegen die Wandflächen 106, 110 mithilfe einer Spanneinrichtung in axialer Richtung gegeneinander verspannt werden, was die feste Arretierung der Wanddurchführung 1 innerhalb der Öffnung weiter verbessert.

Die oben genannten Verfahrensschritte können aufgrund der Einfachheit der Ausgestaltung der erfindungsgemäßen Wanddurchführung 1 durch einen Fachhandwerker des Rohbaus oder einem beliebigen anderen Fachhandwerker ausgeführt werden, der nicht zwingend ein Heizungs- und Wärmepumpeninstallateur zu sein hat.

Nach dem Installieren der Wärmeübertrager-Wanddurchführung 1 in der Öffnung werden dann durch einen Heizungs- und Wärmepumpeninstallateur die medienführenden Leitungen innerhalb der Wanddurchführung 1 montiert, welche über die Durchgänge 6, 6' und entlang der Aufnahme 38, 38` der Verbinderstruktur 12 durch die Wanddurchführung 1 hindurchgeführt werden. Nach dem Hindurchführen der medienführenden Leitungen 114, 116 werden diese insbesondere auf der außenseitig angeordneten Verschlusseinheit 2 mit ihren Außenseiten unter Verwendung von Dichtungsteilen 44 gegenüber den Durchgängen 6, 6' abgedichtet. Die Verschlusseinheiten 2, 4 sind somit auch dazu eingerichtet, gegenüber den die Durchgänge 6, 6' passierenden Leitungen 114, 116 abzudichten.

In die weiteren Durchgänge 30, 30' für die Strom- oder Signalleitung 118 werden ebenfalls geeignete Dichtungsteile 46 eingesetzt, die einerseits gegenüber den Durchgängen und andererseits gegenüber dem Außendurchmesser einer durch die Durchgänge 30, 30' hindurchzuführenden Storm- oder Signalleitung 118 abdichten.

In einem nicht näher dargestellten Verfahrensschritt kann über eine an der Verschlusseinheit 2 vorgesehene Einfüllöffnung 42 ein Wärmedämmmaterial in den durch die Verschlusseinheiten 2, 4 seitlich begrenzten und in der Öffnung 104 verbleibenden Aufnahmeraum 48 eingegeben werden.

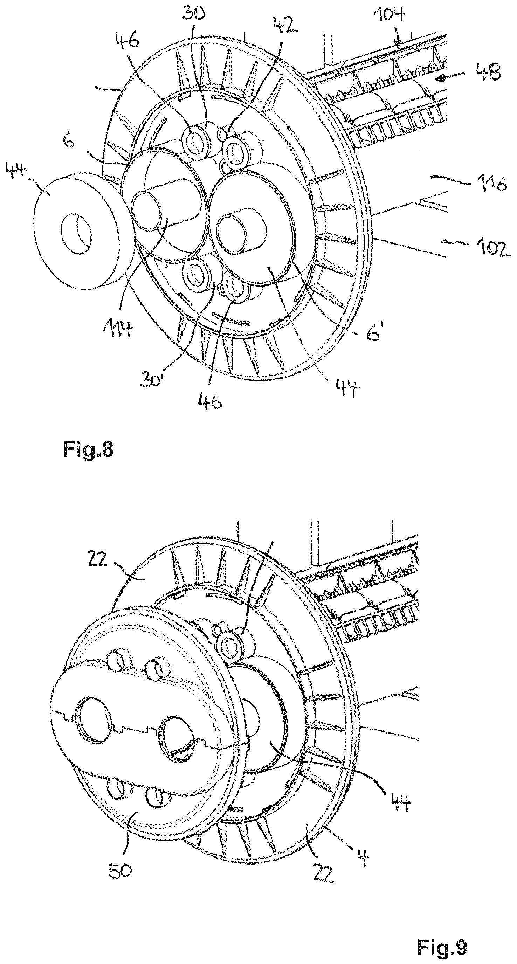

In Fig. 9 wird insbesondere die außenseitig angeordnete Verschlusseinheit 2, insbesondere der Durchführungsbereich für die Leitungen 114, 116, 118 durch eine mit der Außenseite der Verschlusseinheit 2 in Kontakt bringbare Abdeckung 50 überdeckt. Die Abdeckung 50 kann einteilig oder auch, wie in der vorliegend gezeigten Ausführung, zweiteilig ausgeführt sein, was die nachträgliche Montage der Abdeckung um bereits verlegte medienführende Leitungen herum vereinfacht.

In einem weiteren Verfahrensschritt ist vorgesehen, dass mindestens eine Strom- oder Signalleitung 118 durch wenigstens einen der zusätzlichen an der Wanddurchführung 1, insbesondere den Verschlusseinheiten 2, 4, ausgebildeten Durchgänge 30, 30' hindurchgeführt wird, wie in Fig. 10 gezeigt. Mittels der Storm- oder Signalleitung erfolgt vom Innengerät 112 in Richtung des Außengeräts 108 die Stromversorgung bzw. die Ansteuerung des Außengeräts 108.

Fig. 11 zeigt eine bevorzugt komplettierte Wärmeübertrager-Wanddurchführung 1, welche sich insbesondere durch einen mehrschaligen Wandabschnitt 102 eines Gebäudes erstreckt. Damit ist die Verwendung einer Wärmeübertrager-Wanddurchführung 1 zum Durchführen von mindestens zwei medienführenden Leitungen 114, 116 für das fluidleitende Verbinden eines außenseitig an einem Gebäude anordenbaren Außengeräts 108 mit einem im Gebäude anordenbaren Innengerät 112 eines Wärmeübertrager-Systems 100 durch eine oberirdische Öffnung 104 im Wandabschnitt 102 gezeigt.

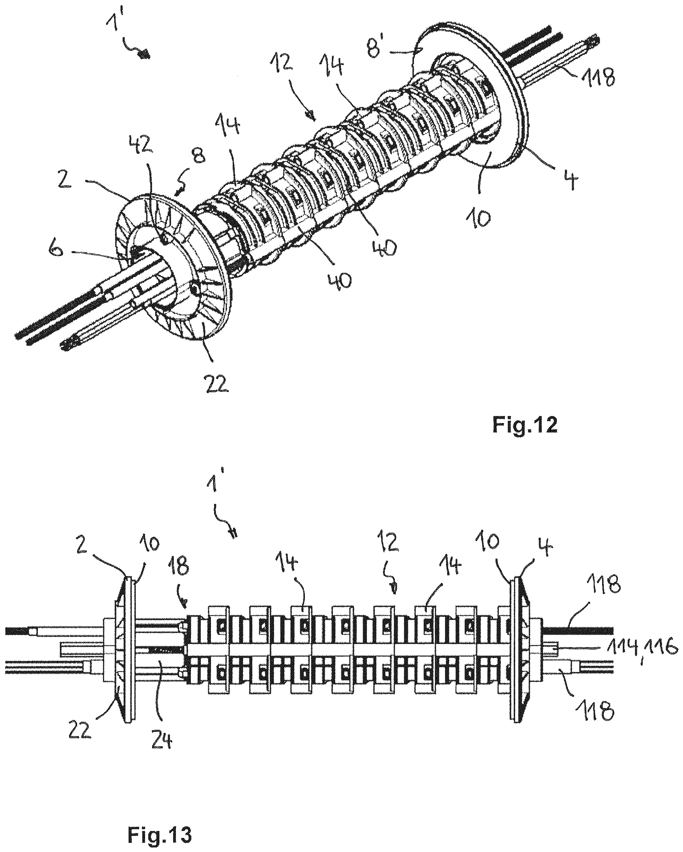

Die Fig. 12 und 13 zeigen Ansichten einer weiteren Ausführung einer Wärmeübertrager-Wanddurchführung 1' zur Installation eines Wärmeübertrager-Systems 100 mit mehreren medienführenden Leitungen 114, 116, wobei die Wanddurchführung 1' ebenfalls zum Durchführen der Leitungen 114, 116 durch die oberirdische Öffnung 104 im Wandabschnitt 102 (Fig.1) eingerichtet ist. Die Wärmeübertrager-Wanddurchführung 1', im Weiteren auch nur als Wanddurchführung 1' bezeichnet, weist eine erste Verschlusseinheit 2 und eine zweite Verschlusseinheit 4 auf, welche jeweils einen einzigen zentralen Durchgang 6 für die durch die Öffnung 104 hindurchzuführenden Leitungen 114, 116 aufweisen.

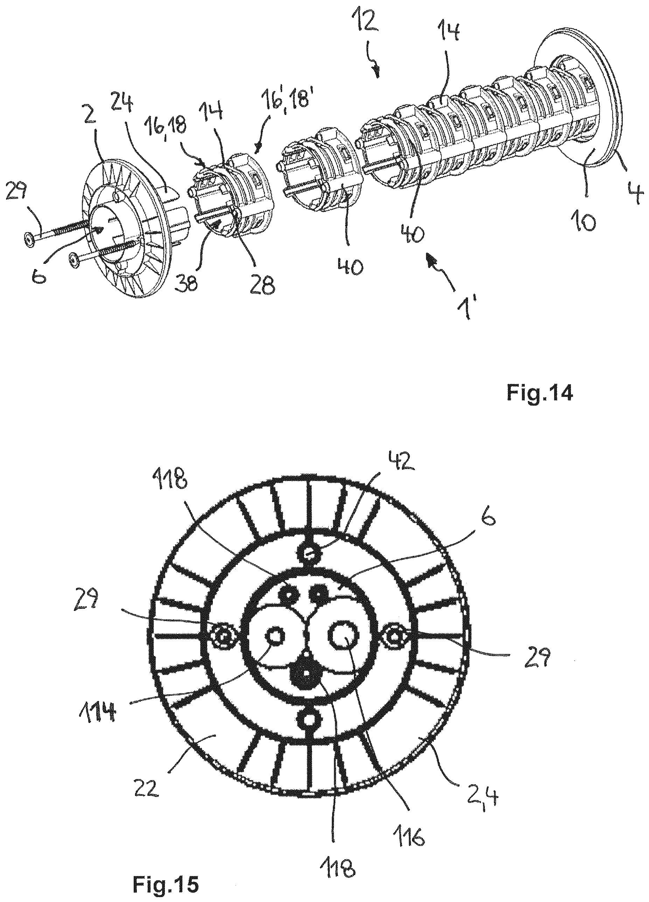

Ferner sind die Verschlusseinheiten 2, 4 dazu eingerichtet, auf voneinander abgewandten Wandflächen 106, 110 des Wandabschnitts 102 in Anlage mit dem Wandabschnitt 102 gebracht zu werden. In der gezeigten Ausführung sind beide Verschlusseinheiten 2, 4 gegenüber der Öffnung 104 im Wandabschnitt 102 abgedichtet. Insbesondere ist an jeder Verschlusseinheit 2, 4 ein Dichtelement 10 vorgesehen, das die Abdichtung gegenüber der Wandfläche 106 gewährleistet. Die Verschlusseinheiten 2, 4 sind durch eine Verbinderstruktur 12 miteinander gekoppelt, wobei die Verbinderstruktur 12 zur geführten Aufnahme der durch die Öffnung 104 hindurchzuführenden Leitungen 114, 116 eingerichtet ist. Erfindungsgemäß umfasst die Verbinderstruktur 12, um verschiedene Wandstärken b zwischen den zu beiden Seiten des Wandabschnitts anzuordnenden Verschlusseinheiten 2, 4 überbrücken zu können, mehrere strukturell in Reihe miteinander verbindbare Verbindersegmente 14, welche jeweils endseitig miteinander korrespondierende Kopplungsmittel 16, 16' (siehe Fig. 14) für eine strukturelle Verbindung der Verbindersegmente 14 untereinander haben.

Die Verbindersegmente 14 weisen, wie Fig.14 verdeutlicht, jeweils ein erstes Ende 18 und ein zum ersten Ende entgegengesetzt angeordnetes, zweites Ende 18' auf. Dabei sind die Kopplungsmittel 16 am ersten Ende 18 jeweils funktions- oder formidentisch und die Kopplungsmittel 16' am zweiten Ende 18` ebenfalls jeweils funktions- oder formidentisch ausgebildet. Mithilfe der erfindungsgemäß ausgebildeten Verbindersegmente 14 kann durch Kaskadierung der Verbindersegmente 14 hintereinander eine beliebig lange Verbinderstruktur 12 erzeugt werden. Die Kopplungsmittel 16, 16' der Verbindersegmente 14 und 14 wirken form- und/oder kraftschlüssig zusammen. Durch den Form- und/oder Kraftschluss ist eine feste Verbindung zwischen den die Verbinderstruktur 12 erzeugenden Verbindersegmenten 14 bewirkt.

Wie ferner aus den Fig. 12 bis 15 ersichtlich, weisen die Verschlusseinheiten 2, 4 zumindest einen sich außerhalb der Öffnung erstreckenden Flanschkörper 22 auf. Mit dem Flanschkörper 22 der Verschlusseinheit 2 wirkt das Dichtelement 10 zusammen, welches sich vorzugsweise ringförmig entlang der Peripherie der Verschlusseinheit 2, insbesondere des Flanschkörpers 22 erstreckt.

Wie aus Fig. 13 und 14 ferner ersichtlich, sind an den Innenseiten 8, 8' der Verschlusseinheiten 2, 4 Steckteile 24, 24` ausgebildet, die mit den Verbindersegmente 14 zusammenwirken. Die Steckteile 24 stehen innenseitig stegartig an den Verschlusseinheiten 2, 4 ab. Vorliegend werden die Steckteile 24 in den Verbindersegmenten 14 in axialer Richtung der Verbinderstruktur 12 verschieblich geführt aufgenommen. Damit ist die Kopplung der Verschlusseinheiten 2, 4 mit der Verbinderstruktur 12 bewirkt.

Ferner sind an den Verbindersegmenten 14 Aufnahmen 28 für darin einsetzbare Fügestifte 29 als Fügehilfe für die mit einem Ende der in die Öffnung 104 des Wandabschnitts 102 eingesetzten Verbinderstruktur 12 zu koppelnde Verschlusseinheit 2,4 vorgesehen.

Ebenso wie die Verbindersegmente 14 sind auch die Verschlusseinheiten 2, 4 funktions- oder formidentisch bzw. baugleich ausgebildet, wodurch zum Herstellen der erfindungsgemäßen Wärmeübertrager-Wanddurchführung 1' eine verringerte Anzahl an Einzelbauteilen benötigt wird und somit deren Herstellung insgesamt vereinfacht ist. Sowohl für die Verbindersegmente 14 als auch für die Verschlusseinheiten 2, 4 wird jeweils nur eine Spritzgussform benötigt.

Der eine Durchgang 6 für die medienführenden Leitungen 114, 116 dient, wie Fig. 12 und 15 zeigen, ferner zum Aufnehmen von Strom- oder Signalleitungen 118.

Wie aus Fig. 14 zu entnehmen ist, bilden die Verbindersegmente 14 eine zentrale Aufnahme 38 für die medienführenden Leitungen 114, 116 und die Strom- oder Signalleitungen 118 aus. Zudem ist an jedem Verbindersegment 14 eine parallel und/oder senkrecht zu der Aufnahmen 38 für die Leitungen 114, 116 verlaufende Verrippung 40 vorgesehen, mit der die strukturelle Integrität bzw. Festigkeit der einzelnen Verbindersegmente 14 verbessert ist. Jede Verschlusseinheit 2, 4weist eine Einfüllöffnung 42 für ein in die Öffnung einzubringendes Wärmedämmmaterial, wie beispielsweise einen Zwei-Komponenten-Schaum, auf. Die Einfüllöffnung 42 dient zugleich als Entlüftung. Mit dem insbesondere nach dem Hindurchführen der medienführenden Leitungen 114, 116 durch die erfindungsgemäße Wanddurchführung 1 eingebrachten Wärmedämmmaterial, erfolgt eine vorteilhafte thermische wie auch schallisolierende Wirkung der Leitungen 114, 116 gegenüber dem Wandabschnitt 102.

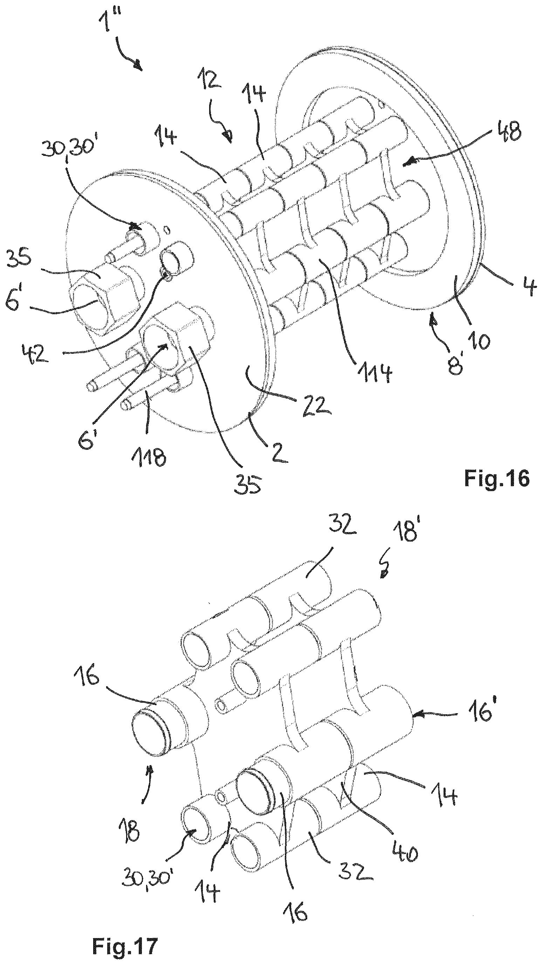

In Fig. 16 ist eine weitere Ausführung einer Wärmeübertrager-Wanddurchführung 1" zur Installation eines Wärmeübertrager-Systems 100 mit mehreren medienführenden Leitungen 114, 116 gezeigt, wobei die Wanddurchführung 1" zum Durchführen der Leitungen 114, 116 durch eine oberirdische Öffnung 104 im Wandabschnitt 102 eingerichtet ist. Die Wärmeübertrager-Wanddurchführung 1", im Weiteren auch nur als Wanddurchführung 1" bezeichnet, weist eine erste Verschlusseinheit 2 und eine zweite Verschlusseinheit 4 auf, welche Durchgänge 6, 6` (Fig. 3, 7) aufweisen, die insbesondere die durch die Öffnung 104 hindurchzuführenden Leitungen 114, 116 ausbilden.

Ferner sind die Verschlusseinheiten 2, 4 dazu eingerichtet, auf voneinander abgewandten Wandflächen 106, 110 des Wandabschnitts 102 in Anlage mit dem Wandabschnitt 102 gebracht zu werden. In der gezeigten Ausführung sind beide Verschlusseinheiten 2, 4 gegenüber der Öffnung 104 im Wandabschnitt 102 abgedichtet. Insbesondere ist an jeder Verschlusseinheit 2, 4 ein Dichtelement 10 vorgesehen, das die Abdichtung gegenüber der Wandfläche 106 gewährleistet. Die Verschlusseinheiten 2, 4 sind durch eine Verbinderstruktur 12 miteinander gekoppelt, wobei die Verbinderstruktur 12 selbst zur Ausbildung der durch die Öffnung 104 hindurchzuführenden Leitungen 114, 116 eingerichtet ist. Erfindungsgemäß umfasst die Verbinderstruktur 12, um verschiedene Wandstärken b zwischen den zu beiden Seiten des Wandabschnitts anzuordnenden Verschlusseinheiten 2, 4 überbrücken zu können, mehrere strukturell in Reihe miteinander verbindbare Verbindersegmente 14, welche jeweils endseitig miteinander korrespondierende Kopplungsmittel 16, 16` für eine strukturelle Verbindung der Verbindersegmente 14 untereinander haben.

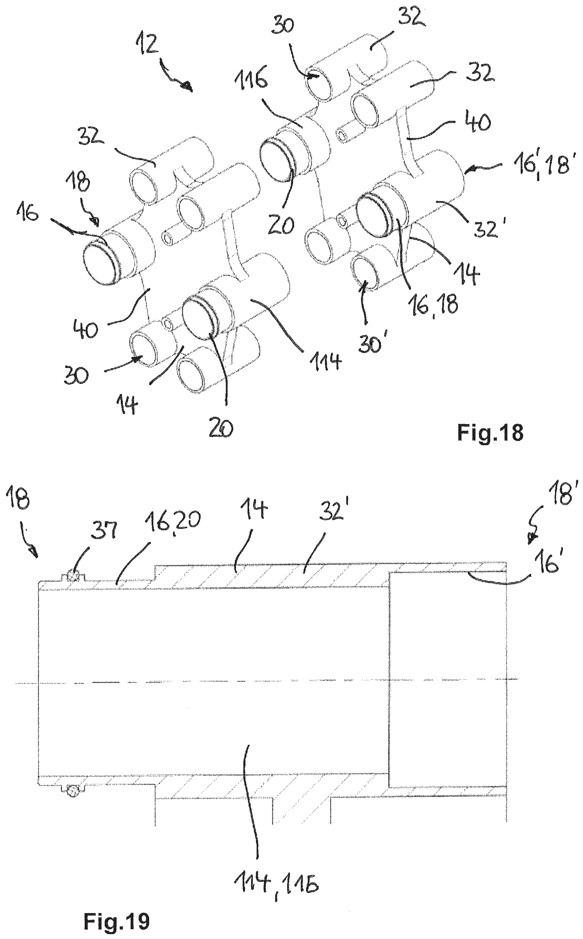

Wie Fig. 17 und 18 zeigen, weisen die Verbindersegmente 14 jeweils ein erstes Ende 18 und ein zum ersten Ende entgegengesetzt angeordnetes, zweites Ende 18' auf. Dabei sind die Kopplungsmittel 16 am ersten Ende 18 jeweils funktions- oder formidentisch und die Kopplungsmittel 16' am zweiten Ende 18` ebenfalls jeweils funktions- oder formidentisch ausgebildet. Mithilfe der erfindungsgemäß ausgebildeten Verbindersegmente 14 kann durch Kaskadierung der Verbindersegmente 14 hintereinander eine beliebig lange Verbinderstruktur 12 erzeugt werden.

An jedem Ende 18, 18' der Verbindersegmente 14 sind mehrere Kopplungsmittel 16, 16' vorgesehen, wobei die Kopplungsmittel 16 am ersten Ende 18 des Verbindersegments 14 mit den jeweils zu verbindenden Kopplungsmitteln 16' am zweiten Ende 18` eines weiteren Verbindersegments 14 form- und/oder kraftschlüssig zusammenwirken. Durch den Form- und/oder Kraftschluss ist eine feste Verbindung zwischen den die Verbinderstruktur 12 erzeugenden Verbindersegmenten 14 bewirkt.

Gemäß einer bevorzugten Ausführung sind sämtliche Verbindersegmente insgesamt funktions- oder formidentisch bzw. baugleich ausgeführt.

Die Kopplungsmittel 16, 16` an den Verbindersegmenten 14 sind in der gezeigten Ausführung als hohlzylindrische Steckverbinder 20, 20' ausgeführt, wobei die Steckverbinder 20 am ersten Ende 18 Außenabmaße, insbesondere einen Außendurchmesser haben, der auf die Innenabmaße, insbesondere den Innendurchmesser der Steckverbinder 20' am zweiten Ende 18` eines jeden Verbindersegments 14 abgestimmt ist. Die Kopplungsmittel 16, 16' und die sich anschließende, und die Kopplungsmittel verbindende hohlzylindrische Struktur 32' bilden vorliegend die medienführenden Leitungen 114, 116 an der Verbinderstruktur 12 aus.

Ähnlich wie die vorherigen Ausführungsformenen, weisen die Verschlusseinheiten 2, 4 zumindest einen sich außerhalb der Öffnung erstreckenden Flanschkörper 22 auf. Mit dem Flanschkörper 22 der Verschlusseinheit 2 wirkt das Dichtelement 10 zusammen, welches sich vorzugsweise ringförmig entlang der Peripherie der Verschlusseinheit 2, insbesondere des Flanschkörpers 22 erstreckt.

An den Innenseiten 8, 8' der Verschlusseinheiten 2, 4 sind ferner mit den Kopplungsmitteln 16, 16` der Verbindersegmente 14 zusammenwirkende, nicht näher gezeigte Steckteile ausgebildet, welche mit den Durchgängen 6, 6' fluchten und ebenfalls Teil der Fluidleitungen 114, 116 sind. Die Steckteile sind als innenseitig an den Verschlusseinheiten 2, 4 vorstehende Hülsenkörper ausgebildet, die insbesondere bezogen auf die Abmessungen der als Steckverbinder 20, 20' ausgebildeten Kopplungsmittel 16, 16` an den Verbindersegmenten 14 abgestimmte Außenabmessungen haben. Vorliegend werden die Steckteile in den Kopplungsmitteln 16, 16` in axialer Richtung der Verbinderstruktur 12 fluiddicht geführt aufgenommen. Damit ist eine medienführende Kopplung der Verschlusseinheiten 2, 4 mit der Verbinderstruktur 12 geschaffen.

Außenseitig sind an den Durchgängen 6, 6' der Verschlusseinheiten 2, 4 jeweils Schraubverbinder 35 angeordnet, mittels denen eine fluidleitende Verbindung der Durchgänge 6, 6' mit entsprechenden weiterführenden Leitungsabschnitten hergestellt wird. Die Verschlusseinheiten 2, 4 sind funktions- oder formidentisch bzw. baugleich ausgebildet, wodurch zum Herstellen der erfindungsgemäßen Wärmeübertrager-Wanddurchführung eine verringerte Anzahl an Einzelbauteilen benötigt wird und somit die Herstellung der Wanddurchführung 1" insgesamt vereinfacht ist. Sowohl für die Verbindersegmente 14 als auch für die Verschlusseinheiten 2, 4 wird jeweils nur eine Spritzgussform benötigt.

Neben den Durchgängen 6, 6' für die medienführenden Leitungen 114, 116 sind an den Verschlusseinheiten 2,4 zusätzlich ein oder mehrere Durchgänge 30, 30' für eine Strom- oder Signalleitung 118 (Fig. 10, 11) ausgebildet. Die Durchgänge 30, 30' für die Strom- oder Signalleitung 118 verlaufen parallel zu den Durchgängen 6, 6' an den jeweiligen Verschlusseinheiten 2, 4 und zu den die Verbindersegmente 14 miteinander verbindenden Kopplungsmitteln 16, 16`. Die Durchgänge 30, 30' bilden Leerrohre 32 für die Strom- oder Signalleitung 118 aus.

Die in die Öffnung 104 eingesetzte Wanddurchführung 1" weist ferner eine nicht näher gezeigte Spanneinrichtung auf, welche dazu eingerichtet ist, die Verschlusseinheiten 2, 4 von beiden Seiten des Wandabschnitts 102 aus in axialer Richtung gegen die jeweiligen Wandflächen 106, 110 zu verspannen.

Zudem ist an jedem Verbindersegment 14 eine parallel und/oder senkrecht zu den die medienführenden Leitungen 114, 116 ausbildenden hohlzylindrischen Strukturen 32' verlaufende Verrippung 40 vorgesehen, mit der die strukturelle Integrität bzw. Festigkeit der einzelnen Verbindersegmente verbessert ist. Jede Verschlusseinheit 2, 4 weist eine Einfüllöffnung 42 für ein in die Öffnung einzubringendes Wärmedämmmaterial, wie beispielsweise einen Zwei-Komponenten-Schaum, auf. Die Einfüllöffnung 42 dient zugleich als Entlüftung. Mit dem insbesondere nach dem Hindurchführen der medienführenden Leitungen 114, 116 durch die erfindungsgemäße Wanddurchführung 1" eingebrachten Wärmedämmmaterial erfolgt eine vorteilhafte thermische wie auch schallisolierende Wirkung der Leitungen 114, 116 gegenüber dem Wandabschnitt 102.

Alternativ kann anstelle eines zwischen die Verschlusseinheiten 2, 4 nach der Montage der Wanddurchführung 1" in die Öffnung 104 im Wandabschnitt einzubringenden Wärmedämmmaterials ein aus einem oder mehreren Formteilen ausgebildetes Wärmedämmmaterial verwendet werden, das mindestens entlang eines Abschnitts der Verbinderstruktur 12 angeordnet und zusammen mit der vorkonfektionierten Verbinderstruktur 12 in die Öffnung 104 eingesetzt wird.

Wie Fig.19 zu entnehmen, weist mindestens eines der Kopplungsmittel 16, 16' am ersten Ende 18 oder am zweiten Ende 18` des Verbindersegments 14 eine Dichtung 37 auf, die mit dem jeweils anderen Kopplungsmittel 16', 16 eines weiteren Verbindersegments 14 eine fluiddichte Verbindung zum Führen eines Mediums herstellt.

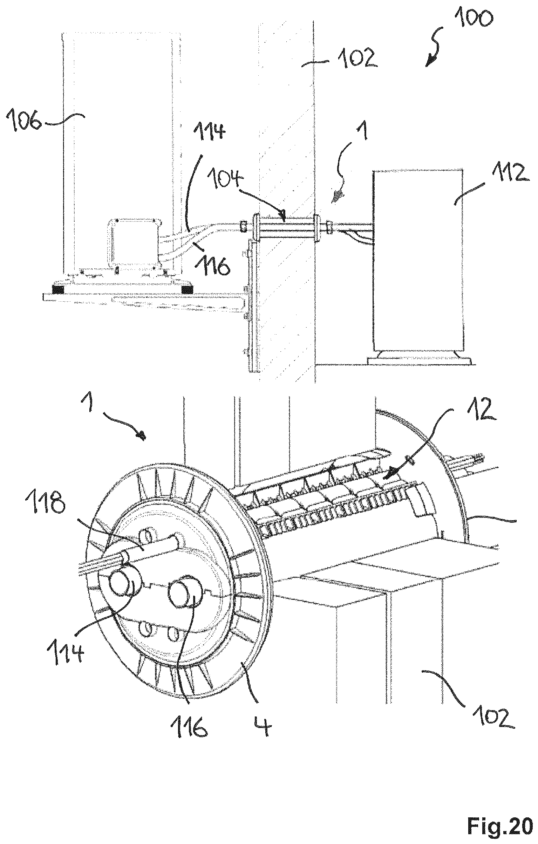

Fig. 20 zeigt eine Zusammenstellung der der Fig. 1 und 11 für die Zwecke der Zusammenfassung. Zur Vermeidung von Wiederholungen wird diesbezüglich auf die obige Ausführungen verwiesen.

### Bezugszeichenliste:

- 1, 1', 1': Wärmeübertrager-Wanddurchführung
- 2, 4: Verschlusseinheit
- 6, 6`: Durchgang
- 8, 8`: Innenseite
- 10: Dichtelement
- 12: Verbinderstruktur
- 14: Verbindersegment
- 16, 16`: Kopplungsmittel
- 18: erstes Ende
- 18': zweites Ende
- 20, 20': Steckverbinder
- 22: Flanschkörper
- 24, 24`: Steckteil
- 26, 26`: Hülsenkörper
- 28: Aufnahme
- 29: Fügestift
- 30, 30': Durchgang
- 32: Leerrohr
- 32': hohlzylindrische Struktur
- 34: Zentrierhilfe
- 35: Schraubverbinder
- 36: Zentrierstege
- 37: Dichtung
- 38, 38`: Aufnahme
- 40: Verrippung
- 42: Einfüllöffnung/Entlüftung
- 44, 46: Dichtungsteil
- 48: Aufnahmeraum
- 50: Abdeckung
- 100: Wärmeübertrager-System
- 102: Wandabschnitt
- 104: Öffnung
- 106: außenseitige Wandfläche
- 108: Außengerät
- 110: innenseitige Wandfläche
- 112: Innengerät
- 114,116: Leitung
- 118: Strom- oder Signalleitung
- b: Wandstärke

## Patentansprüche

1. Wärmeübertrager-Wanddurchführung (1,1') zur Installation eines Wärmeübertrager-Systems (100) mit mehreren medienführenden Leitungen (114, 116), wobei die Wanddurchführung (1) zum Durchführen der Leitungen (114, 116) durch eine oberirdische Öffnung (104) eines Wandabschnitts (102) eingerichtet ist, mit
- wenigstens einer Verschlusseinheit (2, 4), wobei die Verschlusseinheit (2, 4) mindestens einen Durchgang (6, 6`) für die Leitungen (114, 116) aufweist und dazu eingerichtet ist, mit einer Wandfläche (106, 110) des Wandabschnitts (102) in Anlage gebracht zu werden,
**gekennzeichnet durch** eine mit der Verschlusseinheit (2, 4) koppelbaren Verbinderstruktur (12), wobei die Verbinderstruktur (12) mehrere strukturell in Reihe miteinander verbindbare Verbindersegmente (14) aufweist, welche jeweils endseitig Kopplungsmittel (16, 16') aufweisen, die für die strukturelle Verbindung der Verbindersegmente (14) miteinander eingerichtet sind, und
wobei die Verbinderstruktur (12) zur geführten Aufnahme der Leitungen (114, 116) eingerichtet ist.

2. Wärmeübertrager-Wanddurchführung (1,1') nach Anspruch 1,
**dadurch gekennzeichnet, dass** die Verbindersegmente (14) jeweils ein erstes Ende (18) und ein zum ersten Ende (18) entgegengesetzt angeordnetes, zweites Ende (18`) aufweisen, wobei die Kopplungsmittel (16) am ersten Enden (18) jeweils funktions- oder formidentisch und die Kopplungsmittel (16') am zweiten Enden (18') jeweils funktions- oder formidentisch sind.

3. Wärmeübertrager-Wanddurchführung (1,1') nach Anspruch 1 oder 2,
**dadurch gekennzeichnet, dass** die Verbindersegmente (14) jeweils direkt miteinander verbindbar oder mittels eines die Kopplungsmittel (16, 16') der Verbindersegmente (14) miteinander verbindenden Verbinderstücks koppelbar sind, wobei die Kopplungsmittel (16, 16') vorzugsweise als hohlzylindrische Steckverbinder (20, 20`) ausgebildet sind.

4. Wärmeübertrager-Wanddurchführung nach einem der vorstehenden Ansprüche, **dadurch gekennzeichnet, dass** wenigstens zwei Verschlusseinheiten (2, 4) vorgesehen sind, welche auf voneinander abgewandten Wandflächen (106, 110) des Wandabschnitts (102) angeordnet und dazu eingerichtet sind, in Anlage mit dem Wandabschnitt (102) gebracht und mittels der Verbinderstruktur (12) miteinander gekoppelt zu werden, wobei vorzugsweise wenigstens eine der beiden Verschlusseinheiten (2, 4) zum Abdichten gegenüber der Öffnung (104) im Wandabschnitt (102), sowie zum Abdichten gegenüber den die Durchgänge (6, 6`) passierenden Leitungen (114, 116) eingerichtet ist.

5. Wärmeübertrager-Wanddurchführung (1,1') nach einem der vorstehenden Ansprüche,
**dadurch gekennzeichnet**, wobei die Verschlusseinheiten (2, 4) jeweils mit den Kopplungsmitteln (16, 16') der Verbindersegmente (14) zusammenwirkende Steckteile (24, 24`) aufweisen, wobei vorzugsweise
die Steckteile (24, 24`) als innenseitig an den Verschlusseinheiten (2,4) vorstehende Hülsenkörper (26, 26`) ausgebildet sind, die insbesondere bezogen auf die Abmessungen der Kopplungsmittel (16, 16') an den Verbindersegmenten (2, 4) abgestimmte Außenabmessungen haben.

6. Wärmeübertrager-Wanddurchführung (1,1') nach einem der vorstehenden Ansprüche,
**dadurch gekennzeichnet, dass** die Verbindersegmente (14) an mindestens einem ihrer Enden (18, 18`) eine Aufnahme (28) für einen darin einsetzbaren Fügestift (29) aufweisen.

7. Wärmeübertrager-Wanddurchführung (1,1') nach einem der vorstehenden Ansprüche,
**dadurch gekennzeichnet, dass** die Verbindersegmente (14), vorzugsweise die Verschlusseinheiten (2, 4) insgesamt, funktions- oder formidentisch ausgebildet sind.

8. Wärmeübertrager-Wanddurchführung (1,1') nach einem der vorstehenden Ansprüche,
**dadurch gekennzeichnet, dass** die eine oder die zwei Verschlusseinheiten (2, 4) mehrere Durchgänge (6, 6') für jeweils eine medienführende Leitung (114, 116) und zusätzlich ein oder mehrere Durchgänge (30, 30`) für eine Strom- oder Signalleitung (118) aufweisen, wobei vorzugsweise
der oder die Durchgänge (30, 30`) für die Strom- oder Signalleitung (118) koaxial zu dem Steckteil (24, 24`) an der Verschlusseinheit (2, 4) und zu den die Verbindersegmente (14) miteinander verbindenden Hülsenkörpern (26, 26`) fluchten, wobei die Steckteile (24, 24`) zusammen mit den Hülsenkörpern (24, 24`) Leerrohre (32) für die Strom- oder Signalleitung (118) ausbilden.

9. Wärmeübertrager-Wanddurchführung (1,1') nach einem der vorstehenden Ansprüche,
**dadurch gekennzeichnet, dass** mindestens eine der Verschlusseinheiten (2, 4) eine Einfüllöffnung und/oder Entlüftung (42) für in die Öffnung (104) einzubringendes Wärmedämmmaterial aufweist, und/oder ein sich entlang eines Abschnitts der Verbinderstruktur (12) erstreckendes, aus einem oder mehreren Formteilen ausgebildetes Wärmedämmelement vorgesehen ist.

10. Wärmeübertrager-Wanddurchführung (1,1') nach einem der vorstehenden Ansprüche,
**dadurch gekennzeichnet, dass** an den Verschlusseinheiten (2, 4) eine Zentrierhilfe (34) für zumindest das radiale Ausrichten der Verschlusseinheit (2, 4) in der Öffnung (104) vorgesehen ist, wobei die Zentrierhilfe (34) vorzugsweise mehrere kreisförmig um den Mittenbereich der Verschlusseinheit (2, 4) herum angeordnete, innenseitig vorstehende Zentrierstege (36) aufweist.

11. Wärmeübertrager-Wanddurchführung (1,1') nach einem der vorstehenden Ansprüche,
**dadurch gekennzeichnet, dass** die Verbindersegmente (2, 4) mindestens eine Aufnahme (38, 38') für eine oder mehrere der durch die Öffnung (104) hindurchführbaren Leitungen (114, 116) aufweisen, wobei jedes Verbindersegment (2, 4) vorzugsweise ferner ein parallel und/oder senkrecht zur Aufnahme (38, 38`) für die Leitung verlaufende Verrippung (40) hat.

12. Wärmeübertrager-Wanddurchführung (1,1') nach einem der vorstehenden Ansprüche,
mit einer den außenseitigen Durchführungsbereich an der Verschlusseinheit (2, 4) überdeckenden Abdeckung (48), welche vorzugsweise mehrteilig ist.

13. Wärmeübertrager-Wanddurchführung (1") zur Installation eines Wärmeübertrager-Systems (100) mit mehreren medienführenden Leitungen (114, 116), wobei die Wanddurchführung (1) zum Durchführen der Leitungen (114, 116) durch eine oberirdische Öffnung (104) eines Wandabschnitts (102) eingerichtet ist, mit
- einer ersten Verschlusseinheit (2), und
- einer zweiten Verschlusseinheit (4), wobei die Verschlusseinheiten (2, 4) Durchgänge (6, 6') für die Leitungen (114, 116) aufweisen, und die Verschlusseinheiten (2, 4) dazu eingerichtet sind, auf voneinander abgewandten Wandflächen (106, 110) des Wandabschnitts (102) in Anlage mit dem Wandabschnitt gebracht zu werden,
**gekennzeichnet durch** eine die Verschlusseinheiten (2, 4) miteinander koppelnden Verbinderstruktur (12), wobei die Verbinderstruktur (12) mehrere strukturell in Reihe miteinander verbindbare Verbindersegmente (14) aufweist, welche jeweils endseitig Kopplungsmittel (16, 16') aufweisen, die für die strukturelle Verbindung der Verbindersegmente (14) miteinander eingerichtet sind, und
wobei die Verbinderstruktur (12) zur Ausbildung der durch die Öffnung geführten, medienführenden Leitungen (114, 116) eingerichtet ist.

14. Wärmeübertrager-System (100), mit
- einem auf einer Innenseite (110) eines Wandabschnitts (102) eines Gebäudes anordenbaren Innengerät (112),
- einem auf der Außenseite (106) des Wandabschnitts (102) anordenbaren und durch eine oberirdische Öffnung (104) im Wandabschnitt (102) mittels mehrerer medienführender Leitungen (114, 116) mit dem Innengerät (112) verbindbaren Außengerät (106), und
- einer in der Öffnung (104) des Wandabschnitts (102) montierbaren Wärmeübertrager-Wanddurchführung (1, 1') nach einem der Ansprüche 1 bis 12 oder einer in der Öffnung (104) des Wandabschnitts (102) montierbaren Wärmeübertrager-Wanddurchführung (1") nach Anspruch 13.

15. Verfahren zum Installieren einer Wärmeübertrager-Wanddurchführung (1, 1') zum Durchführen von zumindest zwei medienführenden Leitungen (114, 116) durch eine oberirdische Öffnung (104) in einem Wandabschnitt (102), insbesondere einer Wärmeübertrager-Wanddurchführung (1) nach einem der Ansprüche 1 bis 13, umfassend die Schritte:
- Bereitstellen oder Herstellen einer oberirdischen Öffnung (104) in einem Gebäude-Außenwandabschnitt;
- Vorkonfektionieren einer Wärmeübertrager-Wanddurchführung (1), durch Fügen von mindestens zwei oder mehr Verbindersegmenten (14) zu einer Verbinderstruktur (12), welche eingerichtet ist, sich entlang eines Abschnitts der Öffnung (104) zu erstrecken;
- Koppeln einer mindestens einer Verschlusseinheit (2) mit einem Ende der Verbinderstruktur (12);
- Einsetzen der mit einer Verschlusseinheit (2) gekoppelten Verbinderstruktur (12) in die Öffnung (104), wobei die mit der Verbinderstruktur (12) verbundene Verschlusseinheit (2) mit einer innen- oder außenseitigen Wandfläche (106, 110) des Wandabschnitts (102) in Anlage gebracht wird.

16. Verfahren nach Anspruch 15, umfassend einen, mehrere oder sämtliche der nachfolgend angeführten Verfahrensschritte:
- Koppeln einer zweiten Verschlusseinheit (4) mit dem zur ersten Verschlusseinheit (2) entgegengesetzten Ende der Verbinderstruktur (12) und in Anlage bringen der zweiten Verschlusseinheit (4) mit der gegenüberliegenden Wandfläche (110, 106) des Wandabschnitts (102)
- wobei mit dem Koppeln der zweiten Verschlusseinheit (4) mit der Verbinderstruktur (12) die erste und zweite Verschlusseinheit (2, 4) gegen die Wandflächen (106, 110) des Außenwandabschnitts (102) verspannt werden, wobei vorzugsweise mit dem Verspannen wenigstens eine der Verschlusseinheiten (2, 4) gegenüber der Öffnung (104) im Außenwandabschnitt (102) abgedichtet wird;
- Hindurchführen zweier medienführender Leitungen (114, 116) durch mindestens einen an der Wanddurchführung (1) ausgebildeten Durchgang (6, 6`);
- Hindurchführen mindestens einer Strom- oder Signalleitung (118) durch wenigstens einen zusätzlichen an der Wanddurchführung (1) ausgebildeten Durchgang (30, 30`);
- Abdichten der medienführenden Leitung (114, 116) und/oder Strom- oder Signalleitung (118) gegenüber mindestens einer der Verschlusseinheiten (2, 4), insbesondere gegen die außenseitige Verschlusseinheit (4);
- vor dem Einsetzen der mit einer Verschlusseinheit (2) versehenen Verbinderstruktur (12) in die Öffnung (104), Anordnen eines als Formteil ausgebildeten Wärmedämmelements entlang eines Abschnitts der vorkonfektionierten Verbinderstruktur (12);
- nach dem Koppeln der zweiten Verschlusseinheit (4) mit der Verbinderstruktur (12), Einbringen eines Wärmedämmmaterials in einen zwischen den Verschlusseinheiten (2, 4) definierten Aufnahmeraum (48), und
- Überdecken eines Durchführungsbereichs an zumindest der außenseitigen angeordneten Verschlusseinheit (4) mittels einer Abdeckung (50).
